**Europäisches Patentamt**

**European Patent Office**

**Office européen des brevets**

(19)

(11) **EP 1 466 245 B1**

(12) **EUROPÄISCHE PATENTSCHRIFT**

(45) Veröffentlichungstag und Bekanntmachung des Hinweises auf die Patenterteilung:
**27.04.2005 Patentblatt 2005/17**

(21) Anmeldenummer: 02795228.2

(22) Anmeldetag: **18.12.2002**

(51) Int Cl.⁷: **G06F 7/50**

(86) Internationale Anmeldenummer:
**PCT/EP2002/014492**

(87) Internationale Veröffentlichungsnummer:
**WO 2003/060694 (24.07.2003 Gazette 2003/30)**

(54) **RECHENWERK UND VERFAHREN ZUM KOMBINIEREN EINES ERSTEN OPERANDEN MIT EINEM ZWEITEN OPERANDEN**

ARITHMETIC-LOGIC UNIT AND METHOD FOR COMBINING A FIRST OPERAND WITH A SECOND OPERAND

UNITE ARITHMETIQUE ET PROCEDE POUR COMBINER UN PREMIER OPERANDE AVEC UN SECOND OPERANDE

(84) Benannte Vertragsstaaten:
**DE FR GB**

(30) Priorität: **16.01.2002 DE 10201444**

(43) Veröffentlichungstag der Anmeldung:
**13.10.2004 Patentblatt 2004/42**

(73) Patentinhaber: **Infineon Technologies AG 81669 München (DE)**

(72) Erfinder:
- **GAMMEL, Berndt**
  **85570 Markt-Schwaben (DE)**
- **KLUG, Franz**
  **81737 München (DE)**
- **KNIFFLER, Oliver**
  **81739 München (DE)**

(74) Vertreter: **Zinkler, Franz, Dipl.-Ing. et al Patentanwälte Schoppe, Zimmermann, Stöckeler & Zinkler, Postfach 246 82043 Pullach bei München (DE)**

(56) Entgegenhaltungen:
**US-B1- 6 188 240**

- **BEHROOZ PARHAMI: "Computer Arithmetic" 2000 , OXFORD UNIVERSITY PRESS , NEW YORK XP002239391 Seite 75-90**

**Beschreibung**

Die vorliegende Erfindung bezieht sich auf Prozessoren und insbesondere auf Rechenwerke für Prozessoren.

Ein Kernelement eines Rechenwerks oder einer ALU (ALU = arithmetic logic unit = arithmetisch-logische Einheit) ist meistens ein Ein-Bit-Volladdierer, der einen sogenannten Bit-Slice des Rechenwerks darstellt. Ein Ein-Bit-Volladdierer erhält als Eingangssignale die Operandenbits ai bi für die Bitstelle, der der Ein-Bit-Volladdierer zugeordnet ist, und zusätzlich den Übertrag oder Carry des Ein-Bit-Volladdierers des vorausgehenden Bit-Slices. Der vorausgehende Bit-Slice ist dem Bit der Operanden a und b zugeordnet, das um eine Stelle niedriger ist als das aktuell betrachtete Bit.

Als Ausgangssignal liefert der Ein-Bit-Volladdierer ein Zwischen-Summenbit s sowie ein Übertragbit $c_{out}$ für den nächsten Bit-Slice. Der nächste Bit-Slice ist wieder ein Ein-Bit-Volladdierer, der für die Stelle der Operanden a und b vorgesehen ist, die um 1 höher ist als die aktuell betrachtete Stelle.

Ein typischer Ein-Bit-Volladdierer, wie er z. B. in "Computer Architecture a Quantitative Approach", Second Edition, Hennessy und Patterson, Morgan Kaufmann Publishers, Inc., 1996 beschrieben ist, verknüpft die Ausgänge mit den Eingängen folgendermaßen:

$$s = a\bar{b}\bar{c} + \bar{a}b\bar{c} + \bar{a}\bar{b}c + abc \tag{1a}$$

$$c_{out} = ab + ac + bc \tag{1b}$$

Grundsätzlich besteht das Problem beim Aufbauen eines Addierers für n-Bit-Zahlen aus kleineren Stücken, d. h. Bit-Slices, darin, die Überträge von einem Bit-Slice zu dem nächsten zu bringen. Werden mehrere solche Ein-Bit-Volladdierer aneinander gereiht, wobei der Übertrag-Ausgang des vorhergehenden Volladdierers in den Übertrag-Eingang des nächsthöheren Addierers eingespeist wird, so entsteht ein sogenannter Ripple-Carry-Addierer, der aus n Volladdierern besteht. Der Carry-Eingang des niederstwertigen Volladdierers wird dabei auf 0 gesetzt. Für eine Subtraktion kann der Carry-Eingang des niederstwertigen Addierers auf 1 gesetzt werden.

Der Ripple-Carry-Addierer ist dahingehend vorteilhaft, daß er einen relativ geringen Bedarf an Chipfläche hat. Andererseits ist er der langsamste aller Addierer, da ein Ergebnis erst dann erhalten wird, wenn der Carry von der niedersten Stelle bis zur höchsten Stelle "durchgerippelt" ist.

Schnellere Addierer sind der Carry-Look-Ahead-Addierer, der sehr schnell arbeitet, jedoch einen sehr hohen Bedarf an Chipfläche hat. Zwischenlösungen bestehen darin, für einige Bits einen Ripple-Carry-Addierer zu verwenden und die Ripple-Carry-Addiererblöcke unter Verwendung bestimmter Look-Ahead-Gleichungen zusammenzufassen. Ein solcher Addierer ist der bekannte Carry-Skip-Addierer. Auf dem ähnlichen Prinzip basiert auch der Carry-Select-Addierer, der ebenfalls aus mehreren im Vergleich zu den n Bits zu verarbeitenden Operanden kurzen Ripple-Carry-Addierern bestehen kann, deren Carry-Ausgängen entsprechend verarbeitet werden.

Typische Rechenwerke müssen jedoch nicht nur Addiererfunktionen haben, sondern sollten auch zumindest die üblichen logischen Grundfunktionen, wie z. B. XOR, XNOR, NOR, NAND, OR, AND, NOT, ausführen können.

Insbesondere bei Anwendungen, bei denen die Gesamtchipfläche begrenzt ist, und bei denen die Gesamtchipfläche zusätzlich auf einen relativ kleinen Wert begrenzt ist, wie z. B. 25 mm$^2$ für ICs für Kartenanwendungen, wobei auf den ICs auch der gesamte Speicher der Karte untergebracht werden soll, ist ein wesentliches Design-Kriterium, daß die Komponenten der IC möglichst wenig Platz verbrauchen. So ist der beschriebene Ripple-Carry-Addierer optimal bezüglich des Platzverbrauchs, jedoch bezüglich der Rechengeschwindigkeit nicht optimal. Andererseits ist besonders bei Chipkartenanwendungen die Anforderung an die Geschwindigkeit nicht so hoch wie beispielsweise für Graphikkarten, so daß das Chipflächenkriterium eindeutig im Vordergrund steht.

Nachteilig an dem beschriebenen Ripple-Carry-Addierer ist jedoch, daß er gewissermaßen nur ein Einzel-Funktions-Element ist, das ein Summenbit und ein Übertragbit aus drei Addierer-Eingangssignalen berechnen wird. Für die anderen logischen Grundfunktionen müßten daher eigene Komponenten, wie z. B. XOR-, NOR oder NAND-Gatter vorgesehen werden. Dies ist jedoch wiederum dahingehend nachteilhaft, daß der Chipflächenbedarf des Rechenwerks erhöht wird. An dieser Stelle sei angemerkt, daß das Bereitstellen zusätzlicher Komponenten auf Bit-Slice-Ebene zwar auf den einzelnen Bit-Slice bezogen nicht besonders signifikant erscheinen mag. Ist ein n-Bit-Rechenwerk jedoch aus vielen solchen Bit-Slices aufgebaut, so wird der Zusatzaufwand für die logischen Grundfunktionen jedoch erheblich, wenn das gesamte Rechenwerk betrachtet wird. Bereits bei 32-Bit-Rechenwerken oder 64-Bit-Rechenwerken tritt ein deutlicher Chipflächen-Mehrbedarf auf. Wesentlich drastischer wird die Situation jedoch dann, wenn Langzahlrechenwerke aufgebaut werden sollen, wie sie für Krypto-Anwendungen benötigt werden. Solche Langzahlrechenwerke können durchaus 1024 oder 2048 Bit oder mehr breit sein.

Die Aufgabe der vorliegenden Erfindung besteht darin, ein Rechenwerkkonzept zu schaffen, das einen geringen Chipflächenbedarf hat, und das zugleich vielseitig ist.

Diese Aufgabe wird durch ein Rechenwerk nach Patentanspruch 1 oder durch ein Verfahren zum Kombinieren eines ersten Operanden und eines zweiten Operanden nach Patentanspruch 16 gelöst.

Der vorliegenden Erfindung liegt die Erkenntnis zugrunde, daß der Ein-Bit-Volladdierer, der das Kernstück eines Bit-Slices eines Rechenwerks darstellt, nicht nur Addiererfunktionen ausführen soll, sondern multifunktionsfähig sein muß. Dies bedeutet, daß der Ein-Bit-Volladdierer so konstruiert ist, daß er neben seiner originären Addiererfunktion auch zumindest die üblichen logischen Grundfunktionen ausführen muß, ohne daß Änderungen im Addierer selbst bzw. Hinzufügungen im Addierer selbst notwendig sind. Dies wird erfindungsgemäß dadurch erreicht, daß von den bekannten Addierer-Gleichungen für das Summenbit s und den Übertrag $c_{out}$ weggegangen wird und statt dessen folgenden Addierergleichungen verwendet werden:

$$s = \bar{x} \oplus \bar{y} \oplus \bar{z}$$

$$c = \bar{x} \cdot \bar{y} + z \cdot \bar{x} + z \cdot \bar{y}$$

Das sogenannte Zwischen-Summenbit s wird aus einer XOR-Verknüpfung der invertierten Eingangssignale x, y und z berechnet. Das sogenannte Zwischen-Carry-Bit c wird ebenfalls lediglich unter Verwendung der invertierten Eingangssignale x, y gemäß der obigen Gleichung berechnet. Um einen Ripple-Carry-Addierer aufzubauen, wird nicht, wie im Stand der Technik, das Zwischen-Carry-Bit weitergereicht, sondern das invertierte Zwischen-Carry-Bit, das als Operand z an den erfindungsgemäßen Ein-Bit-Volladdierer des nächsthöheren Bit-Slices angelegt wird.

Für Fachleute ist es offensichtlich, daß die obigen Gleichungen auf Gatterebene auf verschiedene Arten und Weisen implementiert werden können.

Ein Vorteil der vorliegenden Erfindung besteht darin, daß durch Belegung des invertierten z-Eingangs und durch Auswahl entweder des Zwischen-Summenbits, des Übertragsbits oder des invertierten Übertragbits sämtliche logische Grundfunktionen XOR, XNOR, NOR, NAND, OR, AND und NOT ohne zusätzliche Gatter berechnet werden können. Dies ist auf die Implementierung des Addierers unter Verwendung des oben bezeichneten Gleichungssystems zurückzuführen. Für ein Rechenwerk werden hierzu lediglich zwei zusätzliche Multiplexer benötigt, nämlich einen Eingangs-Multiplexer, dessen Ausgang mit dem z-Eingang des Ein-Bit-Volladdierers verbunden ist, und einen Ausgangs-Multiplexer, der eingangsseitig mit den Ausgangswerten s, c, $\bar{c}$ verbunden ist, und der ausgangsseitig das Ergebnisbit liefert. Beide Multiplexer haben eine geringe Breite, d. h. sie sind lediglich 3:1-Multiplexer, und können daher platzsparend implementiert werden.

Ein weiterer wesentlicher Vorteil des erfindungsgemäßen Rechenwerks besteht darin, daß es ohne weiteres auch für verschlüsselte Operanden geeignet ist. Hierzu sind keinerlei Modifikationen am Rechenwerk selbst erforderlich. Lediglich ein zusätzlicher Schlüsseleingang pro Bit-Slice ist erforderlich, um nicht nur die Addiererfunktionen s und c sondern auch die logischen Grundfunktionen mit verschlüsselten Operanden berechnen zu können. Als Verschlüsselung wird eine bitweise XOR- oder XNOR-Verknüpfung bevorzugt, da dieser Verschlüsselungsalgorithmus, wenn der Verschlüsselungsparameter, also der Schlüssel, häufig gewechselt wird, schnell ausführbar ist und eine hohe Sicherheit erreicht. Eine weitere Sicherheit wird dadurch erreicht, daß jedes Bit der Eingangsoperanden a, b mit einem eigenen Verschlüsselungsparameter verschlüsselt ist. Eine Verschlüsselung des Carry-Ausgangs eines Bit-Slices für den Carry-Eingang des Rechenwerks des nächsten Bit-Slices ist dann, ohne daß Klartextdaten erzeugt werden müssen, durch eine Umverschlüsselung durchführbar. Die Umverschlüsselung besteht hierbei wieder in der XOR- bzw. XNOR-Verknüpfung des verschlüsselten Ausgangs-Zwischen-Carry-Bits mit einem Umverschlüsselungsschlüssel t, der wiederum eine XOR- bzw. XNOR-Verknüpfung der Verschlüsselungsparameter der beiden betroffenen Bit-Slices ist.

Ein weiterer Vorteil der vorliegenden Erfindung besteht darin, daß der erfindungsgemäße Volladdierer ohne Veränderungen innerhalb der Volladdiererstruktur vornehmen zu müssen auch für eine Subtraktion geeignet ist. Geht man von der üblichen Zweierkomplementdarstellung für vorzeichenbehaftete Zahlen aus, ist die einzige Änderung hierbei, daß der zu subtrahierende Operand invertiert werden muß, und daß ferner das gegenüber der Addition invertierte Zwischen-Carry-Bit am Eingang z angelegt werden muß.

Ein weiterer Vorteil der vorliegenden Erfindung besteht darin, daß das erfindungsgemäße Ein-Bit-Volladdierrechenwerk ebenfalls ohne Modifikationen verwendet werden kann, wenn die beiden Operanden a, b, die addiert, einer ODER-Verknüpfung etc. unterzogen werden sollen, mit voneinander unterschiedlichen Schlüsseln verschlüsselt sind. Für ein solches Rechenwerk sind lediglich, wenn die Verschlüsselung als XOR bzw. XNOR-Verknüpfung ausgeführt ist, drei weitere XOR- bzw. XNOR-Gatter auf Bit-Slice-Ebene nötig, wobei diese zusätzlichen Gatter jedoch platzsparend implementiert werden können, da sie lediglich jeweils zwei Eingänge haben.

Ein besonderer Vorteil der ALU, bei der die Eingangsoperanden verschlüsselt sind, besteht darin, daß sie ein sicheres Rechenwerk implementiert, bei dem an keiner Stelle Klartextdaten vorliegen. Während es zwar bekannt ist, auf dem Bus verschlüsselte Daten zu übertragen, war es im Stand der Technik jedoch bisher üblich, vor der ALU zu entschlüsseln, die Rechenoperationen dann mit den Klartext-Operanden durchzuführen, und nach der ALU wieder zu verschlüsseln, um das Klartextergebnis sicher auf dem Bus übertragen zu können. So lagen jedoch am Eingang und Ausgang der ALU üblicherweise Klartextdaten vor, die Angriffspunkte darstellen. So ist es zwar schwieriger, den Eingang und Ausgang einer ALU abzuhören als die weit verbreitete und besonders regelmäßige Busstruktur einer Schaltung. Das Abhören ist jedoch dennoch mit Aufwand möglich.

Das erfindungsgemäße Rechenwerk ist somit dahingehend flexibel und vielseitig einsetzbar, daß es neben der Implementation der gängigen logischen Grundfunktionen auch ohne weiteres als Rechenwerk für verschlüsselte Daten eingesetzt werden kann, wobei in diesem Fall die Angriffspunkte aus dem Stand der Technik eliminiert sind.

Bevorzugte Ausführungsbeispiele der vorliegenden Erfindung werden nachfolgend Bezug nehmend auf die beiliegenden Zeichnungen detailliert erläutert. Es zeigen:

Fig. 1    eine beispielhafte Implementierung des erfindungsgemäßen Ein-Bit-Volladdierers;

Fig. 2    ein Schaltsymbol für den erfindungsgemäßen Ein-Bit-Volladdierer und die zugehörigen Bestimmungsgleichungen zur Verknüpfung der Eingänge mit den Ausgängen;

Fig. 3    einen Ausschnitt aus einem n-Bit-Rechenwerk mit dem erfindungsgemäßen Ein-Bit-Volladdierer in jedem Bit-Slice und einem Eingangs- und einem Ausgangsmultiplexer;

Fig. 4    ein Ausschnitt aus einem erfindungsgemäßen n-Bitbreiten Rechenwerk, bei dem die beiden Operanden a und b mit dem gleichen Schlüssel verschlüsselt sind;

Fig. 5    eine Übersichtsdarstellung für die die logischen Grundoperationen mit verschlüsselten Operanden;

Fig. 6    eine Übersicht über die Einstellung der Steuersignale m1, m2, um mit dem erfindungsgemäßen Ein-Bit-Volladdierer die logischen Grundfunktionen auf verschlüsselte Operanden durchzuführen;

Fig. 7a    ein Ausschnitt aus einem erfindungsgemäßen n-Bit-Rechenwerk, bei dem die Eingangsoperanden a, b mit unterschiedlichen Schlüsseln i, j verschlüsselt sind.

Fig. 7b    ein Schaltsymbol für das erfindungsgemäße n-Bit-Rechenwerk, bei dem die Eingangs- und die Ausgangssignale dargestellt sind.

Fig. 8    eine Übersichtstabelle zur Einstellung der Steuersignale für das in Fig. 7a gezeigte Rechenwerk;

Fig. 9    eine Übersicht über die Bestimmungsgleichungen für die logischen Grundfunktionen, wenn die Operanden a und b mit unterschiedlichen Schlüsseln verschlüsselt sind; und

Fig. 10    eine allgemeine Darstellung der logischen Grundfunktionen auf verschlüsselte Operanden, wenn als Verschlüsselung eine XOR-Verknüpfung mit einem Verschlüsselungsparameter verwendet wird.

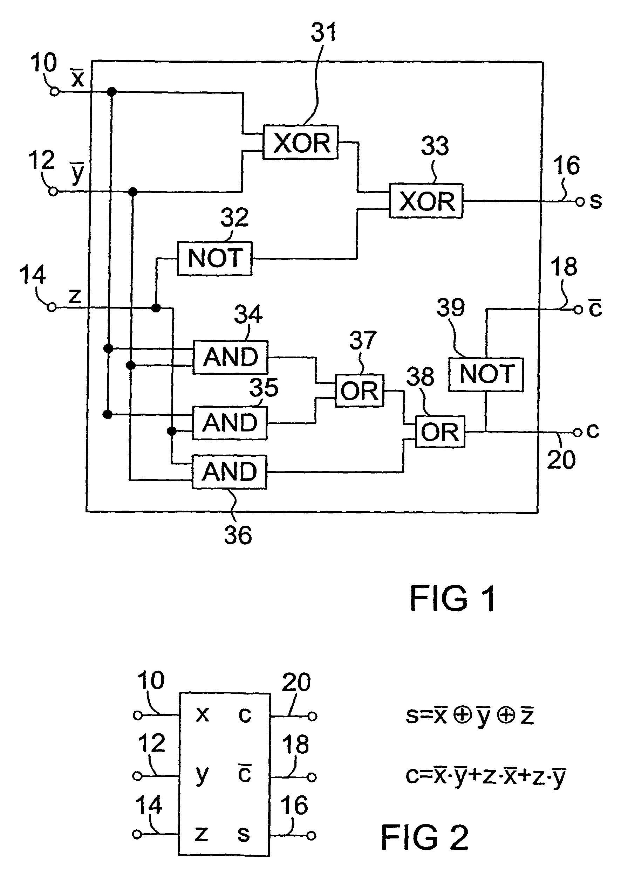

Fig. 1 zeigt ein erfindungsgemäßes Rechenwerk mit einem ersten Addierereingang 10 für ein erstes Addierereingangssignal $\bar{x}$, einem zweiten Addierereingang 12 für ein zweites Addierereingangssignal $\bar{y}$ und einem dritten Addierereingangssignal 14 für ein drittes Addierereingangssignal $\bar{z}$. Das erfindungsgemäße Rechenwerk hat ferner einen ersten Addiererausgang 16 für ein erstes Rechenwerkausgangssignal s und einen zweiten Addiererausgang 18 für eine zweite Addiererausgangsgröße $\bar{c}$. Optional umfaßt das erfindungsgemäße Rechenwerk ferner einen dritten Addiererausgang 20 für ein drittes Rechenwerkausgangssignal c, das eine negierte Version des zweiten Rechenwerkausgangssignals am zweiten Addiererausgang 18 ist.

In Fig. 2 in der linken Hälfte ist das erfindungsgemäße Rechenwerk als Blockschaltbild mit den drei Eingängen 10, 12 und 14 und den drei Ausgängen 16, 18 und 20 dargestellt. In der rechten Hälfte von Fig. 2 sind die Bestimmungsgleichungen für das erfindungsgemäße Rechenwerk gegeben. Sie lauten:

$$s = \bar{x} \oplus \bar{y} \oplus \bar{z} \qquad (2a)$$

$$c = \bar{x} \cdot \bar{y} + z \cdot \bar{x} + z \cdot \bar{y} \qquad\qquad (2b)$$

Das erfindungsgemäße Rechenwerk aus Fig. 1 ist intern so aufgebaut, wie es durch die in Fig. 2 gezeigten Gleichungen vorgegeben ist. Insbesondere wird das erste Rechenwerkeingangssignal am ersten Addierereingang 10 und das zweite Rechenwerkeingangssignal am zweiten Eingang 12 mittels eines XOR-Gatters 31 verknüpft. Ferner wird das dritte Rechenwerkeingangssignal am dritten Eingang 14 mittels eines Invertierers 32 negiert und mit dem Ausgangssignal des XOR-Gatters 31 mittels eines weiteren XOR-Gatters 32 verknüpft, um das erste Addierer- bzw. Rechenwerkausgangssignal am ersten Addiererausgang 16 zu ergeben. Analog dazu wird durch die drei UND-Gatter 34 bis 36 eine Berechnung der Einzelterme der Gleichung für c durchgeführt. Die Ergebnisse der UND-Gatter 34 bis 36 werden dann, wie es in Fig. 1 dargestellt ist, durch die ODER-Gatter 37 und 38 verarbeitet, um das dritte Addierer- bzw. Rechenwerkausgangssignal c am dritten Ausgang 20 zu ergeben. Das dritte Addiererausgangssignal c wird ferner vor seiner Ausgabe mittels eines Invertierers 39 invertiert, um an dem zweiten Rechenwerk- bzw. Addiererausgang 18 das Addierer- bzw. Rechenwerkausgangssignal c zu ergeben.

Soll das Rechenwerk aus Fig. 1 für verschlüsselte Daten verwendet werden, so wird es bevorzugt, statt der beiden 2-fach-XOR-Gatter 31 und 32 ein einziges 3-fach-XOR-Gatter zu verwenden, da dann keine Klartextdaten auftreten. Das 3-fach-XOR-Gatter könnte hierbei als Look-Up-Table beispielsweise als ROM implementiert sein.

Es sei darauf hingewiesen, daß das erfindungsgemäße Rechenwerk ebenfalls so implementiert werden kann, daß die nichtinvertierten Versionen der Eingangssignale x, y eingespeist werden, und daß dann innerhalb des Rechenwerks eine Inversion durch einen jeweiligen Invertierer durchgeführt wird. Für Fachleute ist es offensichtlich, daß viele andere logischen Implementationen des erfindungsgemäßen Rechenwerks, das in Fig. 1 gezeigt ist, möglich sind. Die beiden Gleichungen für s und c können beliebig umgeformt werden, um mittels unterschiedlicher Gatter fest verdrahtet zu werden. Auch eine Software-Realisierung wäre grundsätzlich möglich. Das erfindungsgemäße Rechenwerk soll jedoch als ALU für einen Prozessor dienen und wird daher normalerweise als Hardware realisiert sein. Welche Gatter schließlich zum Einsatz kommen werden, wird von der aktuellen Technologie abhängen, wie es für Fachleute bekannt ist.

In seiner in Fig. 1 gezeigten Form wirkt das erfindungsgemäße Rechenwerk ohne weitere Modifikationen als Ein-Bit-Volladdierer, wobei das erste Addiererausgangssignal am ersten Addiererausgang 16 das Zwischen-Summenbit darstellt, während das zweite Addiererausgangssignal am zweiten Addiererausgang 18 das negierte Zwischen-Carry-Bit darstellt. Ferner stellt das erste Addierereingangssignal am ersten Addierereingang 10 eine negierte Version des entsprechenden Bits des ersten Eingangsoperanden dar, während das zweite Addierereingangssignal am zweiten Addierereingang 12 eine negierte Version des entsprechenden Bits des zweiten Addiereroperanden darstellt. Das dritte Eingangssignal z ist das Übertrag-Bit (Zwischen-Carry-Bit), das von dem entsprechenden Ein-Bit-Volladdierer für das vorhergehende, d. h. um 1 niederwertigere Bit ausgegeben wird. Somit stellt das erfindungsgemäße Rechenwerk in Fig. 1 ohne weitere Modifikationen einen Bit-Slice eines Ripple-Carry-Addierers dar, jedoch mit Eingängen für die negierten Bits der Eingangsoperanden und mit einem Ausgang für das negierte Zwischen-Carry-Bit.

Diese Merkmale, d. h. die negierten Eingangsbits und der negierte Carry-Ausgang versehen das erfindungsgemäße Rechenwerk mit der erforderlichen Vielseitigkeit, um neben der Ein-Bit-Volladdiererfunktion auch sämtliche logischen Grundfunktionen ausführen zu können.

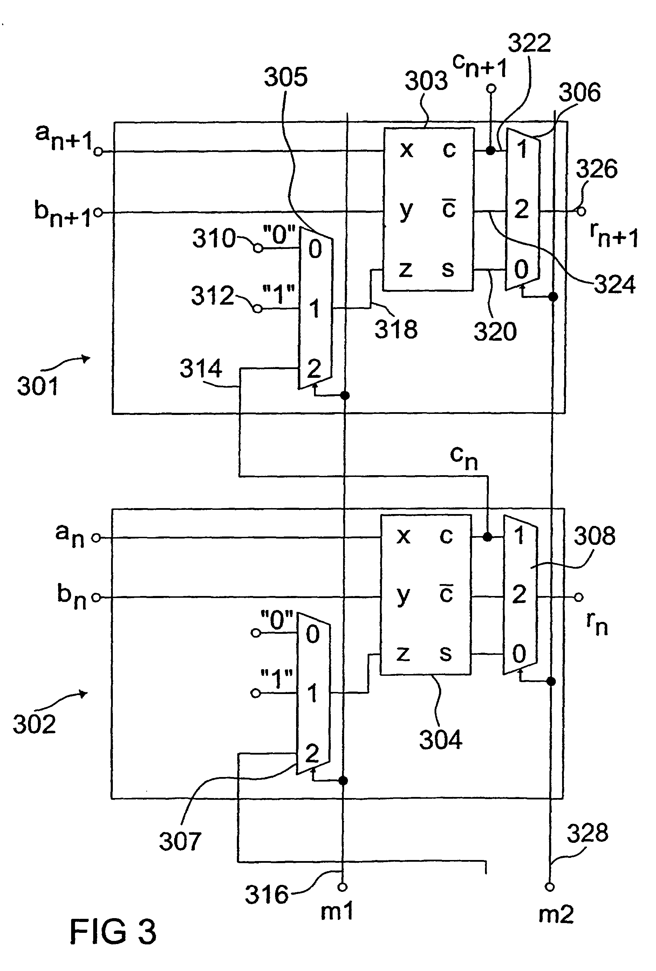

Ein Ausschnitt aus einem solchen vielseitigen und platzsparenden n-Bit-breiten Rechenwerk ist in Fig. 3 gezeigt. Fig. 3 zeigt zwei Bit-Slices 301 und 302, die grundsätzlich identisch aufgebaut sind und als zentrale Komponente das in Fig. 1 gezeigte Rechenwerk 303 für den Bit-Slice 301 und 304 für den Bit-Slice 302 haben.

An dieser Stelle sei darauf hingewiesen, daß aus Einfachheitsgründen die Eingänge x, y in den Rechenwerken 303 und 304 als nicht-invertierte Eingänge dargestellt sind. In diesem Fall hat das erfindungsgemäße Rechenwerk einen dem Eingang 10 und 12 (Fig. 2) nachgeschalteten Invertierer, um die für die in Fig. 2 dargestellten Bestimmungsgleichungen erforderlichen negierten Werte zu erhalten.

Das n-Bit-Rechenwerk gemäß der vorliegenden Erfindung, von dem ein Ausschnitt in Fig. 3 gezeigt ist, umfaßt pro Bit-Slice ferner einen Eingangs-Multiplexer 305 und einen Ausgangs-Multiplexer 306 für den Bit-Slice 301 sowie einen Eingangs-Multiplexer 307 und einen Ausgangs-Multiplexer 308 für den Bit-Slice 302.

An dieser Stelle sei darauf hingewiesen, daß sämtliche Bit-Slices identisch aufgebaut sind. Zur Erklärung der Funktionsweise wird daher im nachfolgenden lediglich auf den Bit-Slice 301 Bezug genommen. Es ist klar, daß diese Darstellung ohne weiteres auf sämtliche anderen Bit-Slices übertragen werden kann.

Der Eingangs-Multiplexer 305 umfaßt zunächst einen ersten Eingangs-Multiplexereingang 310, an dem - fest eingestellt - eine logische "0" anliegt. An einem zweiten Eingangs-Multiplexereingang 312 liegt - fest vorgegeben - eine logische "1" an. Der Eingangs-Multiplexer 305 umfaßt ferner einen dritten Eingangs-Multiplexereingang 314, der mit dem Carry-Ausgang (Nr. 20 von Fig. 2) des Ein-Bit-Volladdierers der vorhergehenden Bit-Slices verbunden ist. Der Eingangs-Multiplexer ist ferner ebenso wie alle anderen Eingangs-Multiplexer der anderen Bit-Slices durch ein Multiplexer-Steuersignal m1 steuerbar, das über eine erste Multiplexer-Steuerleitung 316 anlegbar ist. Der Eingangs-Multiplexer 305 umfaßt ferner einen Eingangs-Multiplexer-Ausgang 318, der, wie es in Fig. 3 gezeigt ist, mit dem dritten Addierereingang 14 (Fig. 2) des Ein-Bit-Volladdierers 303 verbunden ist.

Der Ausgangs-Multiplexer 306 ist ebenfalls wie der Eingangs-Multiplexer 305 ein 3:1-Multiplexer und umfaßt einen ersten Ausgangsmultiplexer-Eingang 320, der mit dem ersten Addiererausgang (Bezugszeichen 16 in Fig. 1) verbunden ist. Ein zweiter Ausgangsmultiplexer-Eingang 322 ist mit dem dritten Addiererausgang (Bezugszeichen 20 in Fig. 1) verbunden. Ein dritter Addierereingang 324 ist mit dem noch verbleibenden zweiten Addiererausgang (Bezugszeichen 18 in Fig. 1) des Ein-Bit-Volladdierers 303 verbunden. Der Ausgangs-Multiplexer 306 hat ferner einen Ausgangsmultiplexer-Ausgang 326, an dem ein Ergebnisbit $r_i$ ausgebbar ist. Der Ausgangs-Multiplexer 306 ist ebenso wie die Ausgangs-Multiplexer der anderen Bit-Slices durch eine Ausgangsmultiplexer-Steuerleitung 328 mittels eines Steuersignals m2 ansteuerbar.

Bereits an dieser Stelle sei darauf hingewiesen, daß das erfindungsgemäße n-Bit-Rechenwerk, von dem ein 2-Bit-Ausschnitt in Fig. 3 gezeigt ist, bereits als Logik-Einheit arbeitet, um die logischen Grundfunktionen XOR, XNOR, NOR, NAND, OR, AND und NOT durchzuführen, wenn lediglich die beiden ersten Eingänge 310 und 312 des Eingangs-Multiplexers 305 und der Ausgangs-Multiplexer 306 verwendet wird. Wenn ferner der dritte Eingangsmultiplexer-Eingang 314 verwendet wird, um das Zwischen-Carry-Bit der vorhergehenden Stufe dem dritten Addierereingang 318 des Addierers 303 zuzuführen, verwendet wird, wirkt das erfindungsgemäße Rechenwerk ferner im Zusammenhang mit dem Ausgangs-Multiplexer 306 als Volladdierer-Bit-Slice eines Ripple-Carry-Addierers.

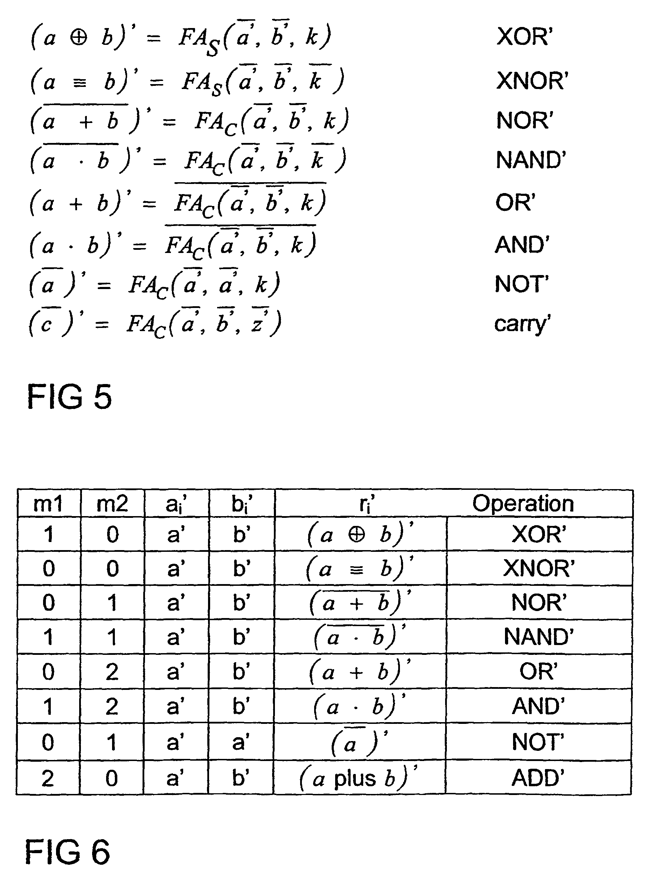

Hierzu wird der Erklärung halber zunächst auf die Fig. 5 und 6 Bezug genommen.

Wie es nachfolgend erklärt werden wird, beziehen sich die Fig. 5 und 6 auf verschlüsselte Operanden a, b und auf Operationen mit verschlüsselten Operanden. Als Verschlüsselungsparameter dient der Parameter k. Wenn in den Fig. 5 und 6 die Apostrophe, die eine Verschlüsselung anzeigen, einfach ignoriert werden, und wenn für den Verschlüsselungsparameter k der Wert "0" verwendet wird ($\bar{k}$ = "1"), dann sind die Fig. 5 und 6 unmittelbar auf einen Bit-Slice des n-Bit-Rechenwerks von Fig. 3 für unverschlüsselte Operanden anwendbar.

Die linke Seite in Fig. 5 zeigt immer die logische Grundoperation, während die rechte Seite von Fig. 5 anzeigt, welches Ergebnis des Volladdierers verwendet werden soll. So bedeutet $FA_s$, daß der Summen-Ausgang, also der erste Addiererausgang (Bezugszeichen 16 in Fig. 1) ausgewählt werden soll. $FA_C$ bedeutet dagegen, daß der Übertrag-Ausgang (Ausgang 20 in Fig. 1) ausgewählt werden soll, während $\overline{FA_C}$ andeutet, daß der negierte Übertrag-Ausgang (Ausgang 18 in Fig. 1) des Rechenwerks 303 ausgewählt werden soll. Diese Auswahl führt der Ausgangs-Multiplexer 306 durch. In den Klammern auf der rechten Seite einer Gleichung in Fig. 5 sind die Operanden x, y, z angegeben, die in das Rechenwerk 303 einzuspeisen sind, um eine entsprechende logische Operation durchzuführen.

Dies wird nachfolgend anhand der XOR-Verknüpfung dargelegt:

Die erste Zeile von Fig. 5 lautet für nicht-verschlüsselte Operanden folgendermaßen:

$$a \oplus b = FA_s(\bar{a},\bar{b},0) \tag{3}$$

Die XOR-Verknüpfung der beiden Operanden a, b wird also damit erreicht, daß als x-Eingang eine negierte Version des Operanden a eingegeben wird, daß als y-Eingang eine negierte Version des Operanden b eingegeben wird, und daß am Z-Eingang eine 0 angelegt werden muß. Der Eingangs-Multiplexer 305 muß daher so gesteuert werden, daß der Eingangsmultiplexer-Eingang 310 durchgeschaltet wird. Dies wird durch einen Wert "0" auf dem Multiplexer-Steuersignal 316 erreicht. Die Multiplexer-Steuersignalwerte sind zusammen mit den Operanden, dem Ergebnis und der Operation in Fig. 6 dargestellt. Für das gerade beschriebene Beispiel der XOR-Funktion wäre die erste Zeile von Fig. 6 anwendbar.

Zur weiteren Verdeutlichung wird nachfolgend beispielhaft die AND-Operation dargelegt. Die entsprechende Gleichung für unverschlüsselte Operanden von Fig. 5 lautet folgendermaßen:

$$a \cdot b = \overline{FA_c(\bar{a},\bar{b},0)} \tag{4}$$

Entsprechend der obigen Notation muß an den x-Eingang des Volladdierers 303 eine negierte Version des ersten Operanden a angelegt werden. Dasselbe gilt für den y-Eingang, an den eine negierte Version des Operanden b angelegt werden muß. Wieder muß an den z-Eingang eine "0" angelegt werden, d. h. der Eingangs-Multiplexer muß angesteuert werden, um den ersten Eingangsmultiplexer-Eingang 310 auf den Ausgang 318 zu legen. Die Notation $FA_C$ bedeutet nun jedoch, daß nicht der Summen-Ausgang des Rechenwerks verwendet werden muß. Statt dessen muß einer der beiden Ausgänge 322 und 324 durch den Ausgangs-Multiplexer ausgewählt werden, und zwar im vorliegenden Fall der Ausgang 324, da $FA_C$ invertiert ist, wie es durch den Oberstrich angedeutet ist.

Soll das Rechenwerk 303 dagegen als Ein-Bit-Volladdierer mit Eingangs-Carry und Ausgangs-Carry arbeiten, so muß der Eingangs-Multiplexer 305 angesteuert werden, um den dritten Eingangsmultiplexer-Eingang 314 an den Ausgang 318 zu legen, und so muß durch den Ausgangs-Multiplexer 306 der Summenausgang 320 durchgeschaltet werden (m2 = 0), und muß das Zwischen-Carry-Bit ($c_{n+1}$) zur nächsthöheren Stufe (in Fig. 3 nicht gezeigt) weitergereicht werden, um von dem dortigen Eingangs-Multiplexer an den z-Eingang des Rechenwerks der dortigen Stufe angelegt zu werden.

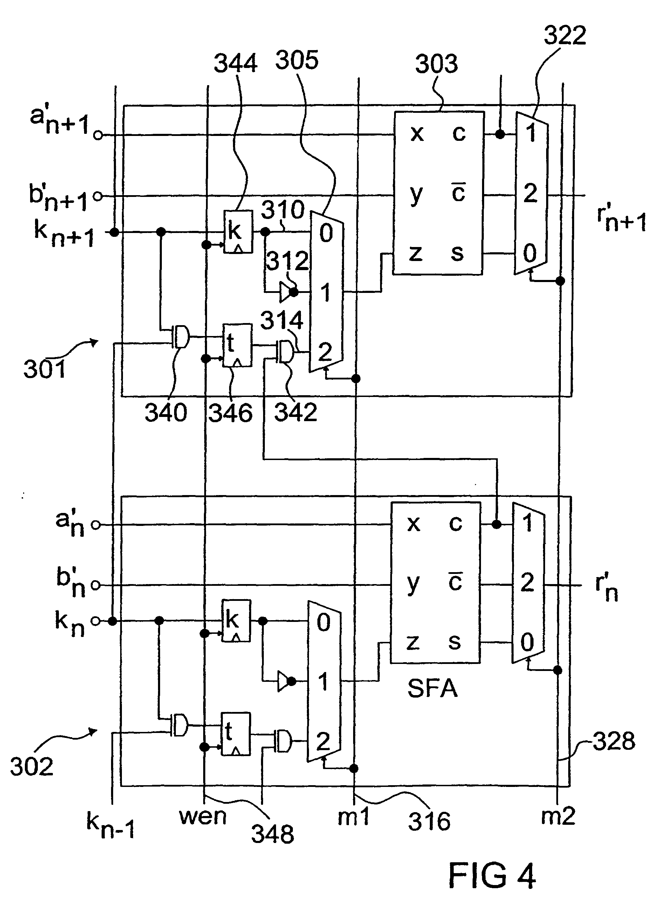

Fig. 4 zeigt einen Abschnitt eines erfindungsgemäßen n-Bit-Rechenwerks für verschlüsselte Operanden a' und b', wobei die Operanden a', b' mit einem Schlüssel k verschlüsselt sind.

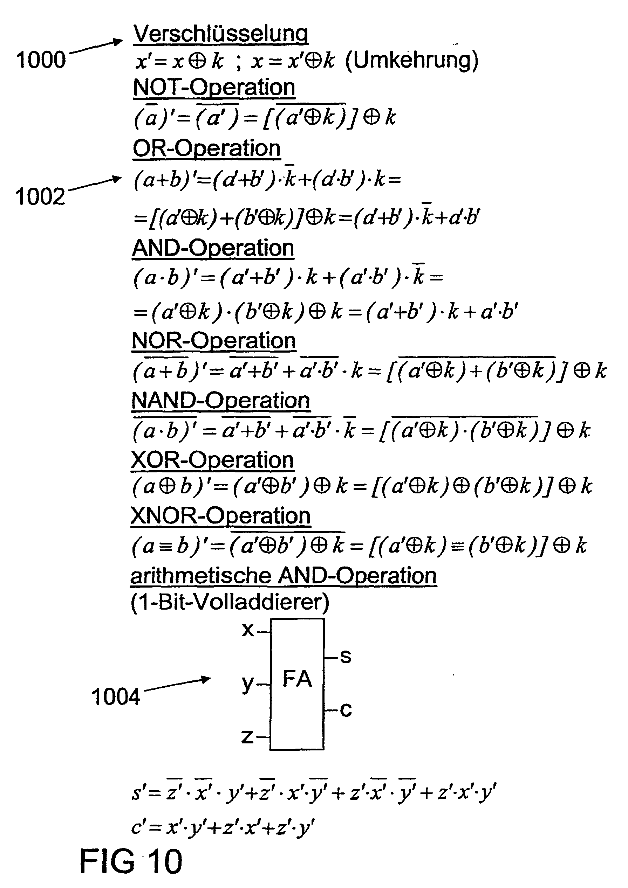

Zur Erläuterung der Verschlüsselung wird zunächst auf Fig. 10 Bezug genommen, um eine Übersicht über die Vorgehensweise zum Erhalten eines Rechenwerks für verschlüsselte Operanden zu erhalten.

Das Bezugszeichen 1000 zeigt ein Beispiel für einen Verschlüsselungsalgorithmus. Ein verschlüsselter Operand x' wird durch XOR-Verknüpfung des unverschlüsselten Operanden x mit einem Verschlüsselungsparameter k berechnet. Daraus läßt sich unmittelbar die Umkehrung des Verschlüsselungsalgorithmus angeben. Aufgrund der Eigenschaft der XOR-Funktion läßt sich der unverschlüsselte Operand x aus dem verschlüsselten Operanden x', der mit dem Verschlüsselungsparameter k XOR-verknüpft ist, berechnen. An dieser Stelle sei darauf hingewiesen, daß prinzipiell jeder umkehrbare Verschlüsselungsalgorithmus verwendbar ist. Aus Übersichtlichkeitsgründen wird jedoch im nachfolgenden die bei 1000 gezeigte Verschlüsselung verwendet. Alternativ könnte auch eine Verschlüsselung in einer XNOR-Verknüpfung eines Operanden mit einem Schlüssel bestehen. Die XOR- bzw. XNOR-Verschlüsselungen haben den Vorteil, daß Rechenwerke für verschlüsselte Operanden relativ überschaubar aufgebaut werden können. Für komplizierter umkehrbare Verschlüsselungsalgorithmen ist jedoch prinzipiell ebenfalls ein Rechenwerkaufbau möglich, wird jedoch komplizierter sein als für die XOR- bzw. XNOR-Verschlüsselung mit einem Schlüssel k.

Die Methodik bei der Vorgehensweise, um eine Operation mit verschlüsselten Operanden zu berechnen, wird nachfolgend beispielhaft anhand der OR-Operation erläutert, die bei 1002 in Fig. 10 gezeigt ist. Das Ziel besteht darin, ein Rechenwerk zu schaffen, in das verschlüsselte Operanden a', b' und der Schlüssel k eingespeist werden, und das als Ausgabe ein verschlüsseltes Ergebnis liefert. Generell ist es möglich, beide Operanden a, b mit unterschiedlichen Schlüsseln i, j zu verschlüsseln und das Ergebnis mit einem weiteren Schlüssel verschlüsselt zu erhalten. Der Übersichtlichkeit halber wird jedoch nachfolgend und Bezug nehmend auf Fig. 4 davon ausgegangen, daß die beiden Operanden a und b sowie das Ergebnis der Operation mit dem gleichen Schlüssel k verschlüsselt sind. Die Aufgabe besteht nunmehr, die ODER-Operation (OR-Operation) der beiden Operanden a, b verschlüsselt zu erhalten. Die unverschlüsselte ODER-Operation lautet folgendermaßen:

$$r = a + b \qquad (5)$$

Diese Gleichung ist im Klartextraum definiert. Die Gleichung im Geheimtextraum würde folgendermaßen lauten:

$$r \oplus k = [a + b] \oplus k \qquad (6)$$

Weiterhin besteht der Wunsch, daß nicht mit unverschlüsselten Operanden a, b gearbeitet wird, sondern daß mit verschlüsselten Operanden a' und b' gearbeitet wird. Daher werden in der vorhergehenden Gleichung die Operanden a, b durch ihre verschlüsselte Version und den Schlüssel ersetzt (Bezugszeichen 1000 in Fig. 10). Damit ergibt sich folgendes:

$$r \oplus k = [(a' \oplus k) + (b' \oplus k)] \oplus k \qquad (7)$$

Die vorhergehende Gleichung umfaßt nur noch den Schlüssel k und die verschlüsselten Operanden a', b'. Diese logische Bestimmungsgleichung ist die Gleichung, von der ausgehend ein Rechenwerk für verschlüsselte Daten zur Implementierung der ODER-Operation entworfen werden kann. Hierzu empfiehlt es sich, die Klammern auf der rechten Seite dieser Gleichung unter Verwendung üblicher Rechenregeln für logische Verknüpfungen aufzulösen, um bei einer Implementation anzukommen, wie sie bei 1002 in Fig. 10 gezeigt ist. Eine solche Implementation besteht beispielsweise in der ODER-Verknüpfung der verschlüsselten Operanden a' und b', die mit dem invertierten Schlüssel $\bar{k}$ UND-verknüpft werden, wobei das Ergebnis der UND-Verknüpfung mit einer UND-Verknüpfung der beiden Operanden a' und b' ODER-verknüpft wird.

Analog dazu kann gemäß Fig. 10 für die anderen Gleichung vorgegangen werden. Dasselbe trifft für die bei 1004 in Fig. 10 gezeigten Addierer-Bestimmungsgleichungen zu. Wird hierbei in Analogie zur oben bezeichneten Vorgehensweise für die ODER-Operation vorgegangen, so zeigt sich, daß der Volladdierer bezüglich der bei 1000 gezeigten Verschlüsselungsoperation kovariant ist, was eine schnelle und einfache Volladdiererimplementierung für verschlüsselte Operanden möglich macht. Für andere Verschlüsselungsalgorithmen als die XOR-Verknüpfung werden die Gleichungen für die verschlüsselten logischen Operationen, die in Fig. 10 gezeigt sind, unterschiedlich aussehen. Diese Gleichungen können jedoch auf der Basis der oben bezeichneten Vorgehensweise hergeleitet und dann unter Verwendung mathematischer Unteroperationen implementiert werden.

Für ein Rechenwerk mit verschlüsselten Operanden ist der prinzipielle Aufbau des Volladdierers 303 und der Aufbau des Ausgangs-Multiplexers 322 sowie der Aufbau des Eingangs-Multiplexers 305 in Fig. 4 prinzipiell identisch zu Fig. 3, in der die Operanden a und b nicht verschlüsselt. Lediglich die Eingangssignale in den Eingangs-Multiplexer 305 werden unterschiedlich berechnet. An dem ersten Eingang 310 des Eingangs-Multiplexers liegt nicht mehr ein fester Wert von "0", sondern der Schlüssel $k_{n+1}$ des aktuellen Bits. An dem zweiten Eingang 312 des Eingangs-Multiplexers 305 liegt nicht mehr, wie in Fig. 3, ständig der Wert "1", sondern der invertierte Wert des Schlüssels $k_{n+1}$. Bezüglich des Übertrags c aus dem Bit-Slice 302 müssen folgende Vorkehrungen getroffen werden. Der Übertrag c aus dem Bit-Slice 302 ist mit dem Schlüssel $k_n$ verschlüsselt. Damit der Übertrag c aus dem Bit-Slice 302, der mit dem Schlüssel $k_n$ verschlüsselt ist, in dem Bit-Slice 301, in dem eine Verschlüsselung mit $k_{n+1}$ vorliegt, richtig verarbeitet wird, muß eine Umverschlüsselung des Übertrags c durchgeführt werden. Dies geschieht durch Errechnen eines Umverschlüsselungs-Schlüssels mittels eines zusätzlichen XOR-Gatters 340, durch das der Schlüssel des aktuellen Bit-Slices $k_{n+1}$ mit dem Schlüssel des vorherigen Bit-Slices $k_n$ XORverschlüsselt wird. Der somit erhaltene Umverschlüsselungs-Schlüssel c wird dann in einem weiteren XOR-Gatter 342 mit dem Übertrag aus dem Bit-Slice 302 XORverknüpft, um an den dritten Eingang 314 des Eingangs-Multiplexers einen Übertrag zu erhalten, der nicht mehr gemäß $k_n$ verschlüsselt ist, sondern der nunmehr gemäß $k_{n+1}$ verschlüsselt ist. Dieser Übertrag kann dann dem Rechenwerk 303, falls der Eingangs-Multiplexer 305 entsprechend eingestellt ist, zugeführt werden, um eine korrekte Übertrag- und Summen-Berechnung durchzuführen.

In Fig. 4 eingezeichnet sind ferner ein Register 344 für den Schlüssel k des aktuellen Bit-Slices sowie ein Register 346 für den aktuellen Umverschlüsselungs-Schlüssel t des aktuellen Bit-Slices. Beide Register können durch eine Enable-Leitung wen 348 (wen = write enable) angesteuert werden, damit sichergestellt ist, daß der zugeführte Schlüssel k und der berechnete Umverschlüsselungs-Schlüssel t zeitlich korrekt zu den anderen Daten vorliegen.

Fig. 5 zeigt zusammen mit Fig. 6 die für die unterstützten logischen Operationen nötigen Eingangswerte und Ausgangswerte, wobei in Fig. 6 insbesondere auf die erste Spalte m1 für das Eingangsmultiplexer-Steuersignal und m2 für das Ausgangsmultiplexer-Steuersignal hingewiesen wird.

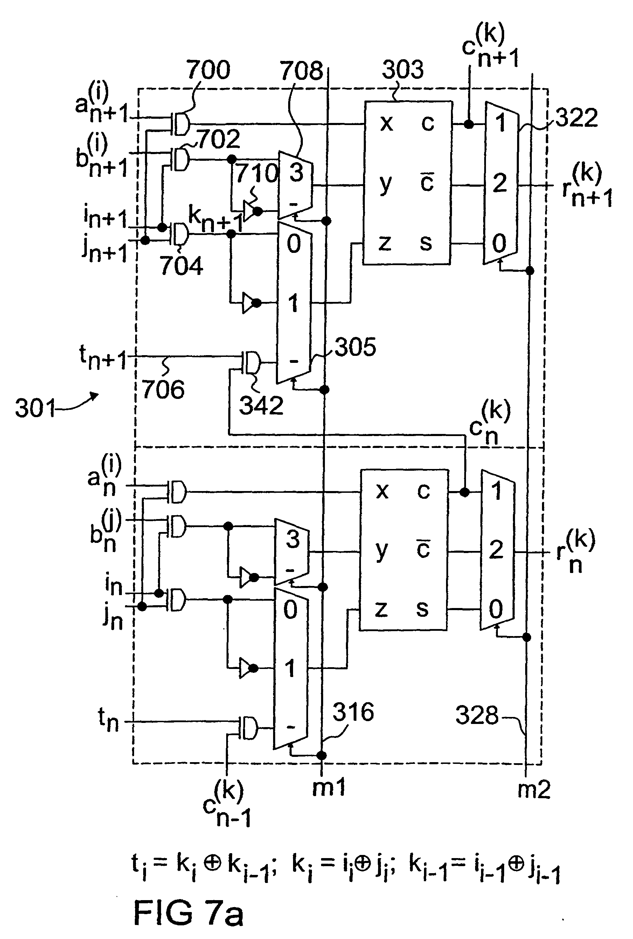

Im nachfolgenden wird auf Fig. 7a Bezug genommen, um ein erfindungsgemäßes n-Bit-breites Rechenwerk zu zeigen, bei dem die beiden Operanden a, b mit unterschiedlichen Schlüsseln i bzw. j verschlüsselt sind, während das Ausgangs-Zwischen-Summenbit im Falle einer Addiererfunktion bzw. das Ergebnisbit r im Falle einer logischen Operation mit einem Schlüssel k verschlüsselt ist, der sich aus einer XOR-Verknüpfung von i und j ergibt.

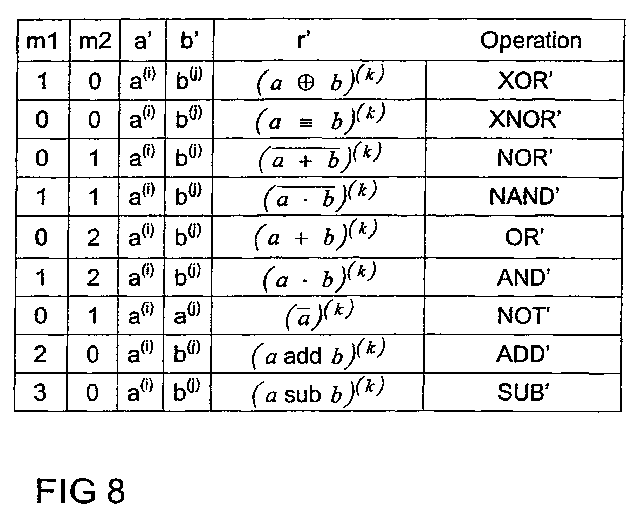

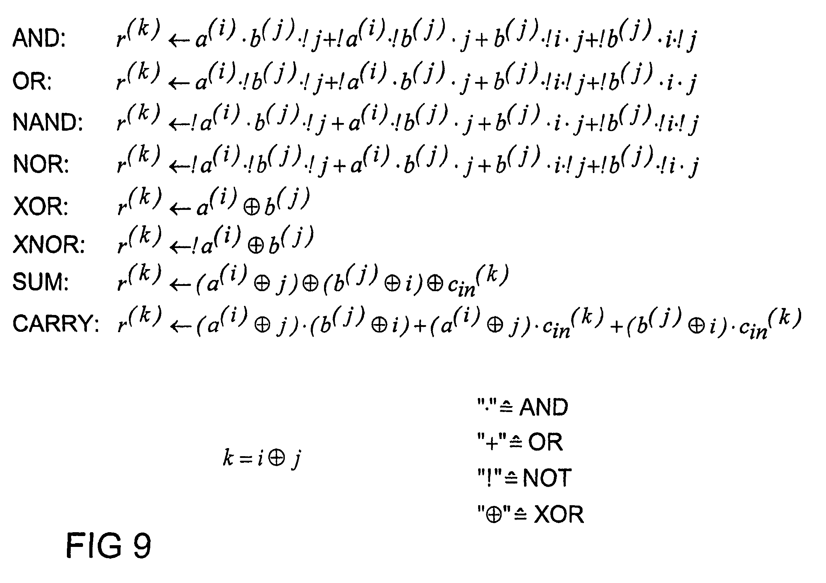

Eine Tabelle für die Steuergrößen m1 und m2 für das in Fig. 7a gezeigte Rechenwerk findet sich in Fig. 8. In Fig. 9 sind die Bestimmungsgleichungen für die entsprechenden logischen Operationen einschließlich Summe und Übertrag gegeben.

Zur Veranschaulichung der Systematik, wenn unterschiedliche Schlüssel für die unterschiedlichen Operanden verwendet werden, wird wieder beispielhaft auf die ODER-Funktion Bezug genommen. Die Bestimmungsgleichungen im Klartextraum für die ODER-Funktion lautet folgendermaßen:

$$r = a + b \tag{5}$$

Das Ergebnis soll mit dem Schlüssel k verschlüsselt sein. Damit ergibt sich folgende Gleichung:

$$r \oplus k = [a + b] \oplus k \tag{6}$$

Nunmehr sollen jedoch unterschiedliche Schlüssel für a und b verwendet werden. Damit ergibt sich folgende Gleichung als Bestimmungsgleichung Implementierung der Operation mit verschlüsselten Operanden:

$$r \oplus k = \lfloor (a^{(i)} \oplus i) + (b^{(j)} \oplus j) \rfloor \oplus [i \oplus j] \tag{7}$$

Die Notation beispielsweise $a^{(i)}$ bedeutet, daß der Operand a mit dem Schlüssel i verschlüsselt ist. Die obige Gleichung kann wieder nach den mathematischen Regeln für solche Gleichungen aufgelöst werden, um zu einer geeigneten Implementation zu gelangen, wie sie beispielsweise in der zweiten Zeile von Fig. 9 dargestellt ist. Hier wird eine Implementation mit drei UND-Gattern mit jeweils drei Eingängen und einem ODER-Gatter mit vier Eingängen angegeben. Alternative Implementationen sind für Fachleute offensichtlich und können durch Umformen der in der zweiten Zeile von Fig. 9 gegebenen Gleichung erhalten werden.

Prinzipiell ähnelt der Aufbau des inneren Rechenwerks von Fig. 7a dem Aufbau von Fig. 4, wobei insbesondere keine Änderungen hinsichtlich des Eingangs-Multiplexers 305, des Ein-Bit-Volladdierers 303 und des Ausgangs-Multiplexers 322 erforderlich sind. Die Berücksichtigung der unterschiedlichen Schlüssel ergibt sich durch drei XOR-Gatter am Eingang des Bit-Slices, die mit 700, 702 und 704 bezeichnet sind. Das XOR-Gatter 700 liefert eine XOR-Verknüpfung des mit i verschlüsselten Operanden $a^{(i)}$ mit dem Schlüssel j. Das XOR-Gatter 702 liefert eine Verknüpfung des mit j verschlüsselten Operanden $b^{(j)}$ mit dem Schlüssel i für den aktuellen Bit-Slice. Das XOR-Gatter 704 liefert eine XOR-Verknüpfung der beiden Schlüssel i und j, um wiederum den Schlüssel k zu ergeben, mit dem der Ausgangswert des Bit-Slices verschlüsselt ist. Der Bit-Slice umfaßt ferner einen weiteren Eingang 706 für den Umverschlüsselungsschlüssel $t_{n+1}$ für den aktuellen Bit-Slice, wobei die Bestimmungsgleichung für t unten in Fig. 7a angegeben ist, wobei t wiederum eine Umverschlüsselung des Zwischen-Carry-Bits des vorherigen Bit-Slices mittels des XOR-Gatters 342 bewirkt. Wie es aus Fig. 7a ersichtlich ist, wird der Umverschlüsselungs-Schlüssel $t_i$ nicht im Bit-Slice selber berechnet, sondern außerhalb. Damit kann die Umverschlüsselungsschlüssel-Berechnung unabhängig von der Berechnung der ALU durchgeführt werden, damit die Funktionsfähigkeit der ALU nicht durch die Berechnung des Umverschlüsselungsschlüssel beeinträchtigt wird.

Fig. 7a zeigt ferner eine Erweiterung des Rechenwerks auf eine Subtraktions-Operation. Hierzu ist ein weiterer Eingangs-Multiplexer 708 vorgesehen, an dessen erstem Eingangswert des Gatters 720 anliegt, während an seinem zweiten Eingang, der mit "-" bezeichnet ist, der durch einen Invertierer 710 invertierte Wert des Ausgangssignals des Gatters 702 anliegt.

Entsprechend der üblichen Notation für Multiplexer (305, 708) bedeutet das "-", dass dieser Multiplexer immer dann ausgewählt wird, wenn nicht ein anderer Eingang durch das Steuersignal ausgewählt wird. Für den Multiplexer 708 bedeutet dies, dass der obere Eingang, der mit "3" bezeichnet ist, ausgewählt wird, wenn das Steuersignal m1 den Wert "3" hat. Für alle anderen Werte wird dagegen der andere mit "-" bezeichnete Eingang ausgewählt.

Für den Multiplexer 305 bedeutet dies, dass der mit "-" bezeichnete Eingang ausgewählt wird, wenn das Steuersignal den Wert "2" oder "3" hat.

Der Multiplexer 708 kann, wie es aus Fig. 8 ersichtlich ist, ebenfalls durch das Steuersignal m1 316 gesteuert werden, um, was zu einer Subtraktion notwendig ist, eine negierte Version des zweiten Operanden b dem zweiten Addierereingang (12 in Fig. 1) zuzuführen. Bei der Subtraktion muß ferner das gegenüber der Addition invertierte Carry-in an den z-Eingang des Addierers angelegt werden (in Fig. 7a nicht gezeigt). Eine mögliche Implementation würde darin bestehen, auch für die Subtraktion den Eingang 2 zu aktivieren. Falls addiert werden soll, muß an den Carry-In der niederstwertigen Position k angelegt werden. Soll dagegen subtrahiert werden, muß an den Carry-In der niederstwertigen Position NOT(k) angelegt werden.

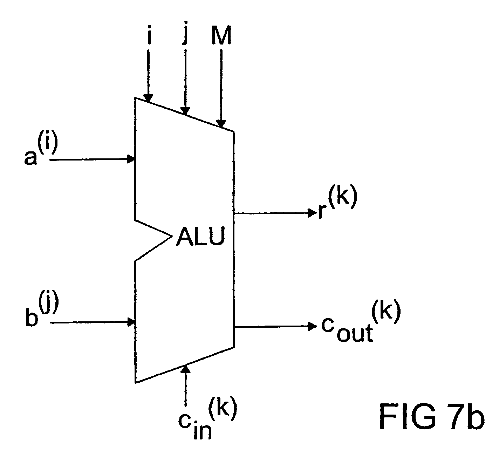

Fig. 7b zeigt ein prinzipielles Blockschaltbild der n-Bit-breiten ALU mit den Eingangsoperanden a und b, die mit i bzw. j verschlüsselt sind, mit den Eingängen i, j für die Schlüssel, mit einem Eingang M für die Multiplexersteuersignale m1 und m2, mit einem Ausgang für das Ergebnis r, das mit dem Schlüssel k verschlüsselt ist und mit einem Ausgang für den höchsten Übertrag, der ebenfalls mit dem Schlüssel k verschlüsselt ist. Ferner ist ein Carry-Eingang für einen Übertrag eingezeichnet, der mit dem Schlüssel k verschlüsselt ist, falls der in Fig. 7b gezeigte n-Bit-Addierer so eingesetzt wird, daß sein Übertrag-Eingang von Bedeutung ist, beispielsweise als mittlerer Block eines Carry-Skip-Addierers oder Carry-Select-Addierers.

Aus der vorhergehenden Beschreibung des erfindungsgemäßen Rechenwerks für unverschlüsselte Daten, für verschlüsselte Daten und für mit mehreren Verschlüsselungsparametern verschlüsselte Daten wird ersichtlich, daß das Kernelement, nämlich der Ein-Bit-Volladdierer in allen Fällen gleich aufgebaut ist, und daß die unterschiedlichen Verschlüsselungen bzw. keine Verschlüsselungen mittels einer Beschaltung dieses Kernelements erreicht werden können. Ferner ist ersichtlich, daß die Eingangs- und Ausgangs-Multiplexer und die entsprechende Beschaltung des Eingangs-Multiplexers eines hohe Funktionalität des Rechenwerks dahingehend ermöglichen, daß neben der Addierer- bzw. Subtrahiererfunktion auch die beschriebenen logischen Grundfunktionen implementiert werden können, so daß die Voraussetzungen für ein platzsparendes Rechenwerk vorhanden sind. Das erfindungsgemäße Kern-Rechenwerk liefert die Vielseitigkeit dahingehend, daß es in allen Entwürfen ohne Veränderung verwendet werden kann, und daß es lediglich für die unterschiedlichen Anwendungen unterschiedlich beschaltet werden muß. Diese Beschaltung erfolgt jedoch mit einfachen Elementen und ist somit in einem Bit-Slice implementierbar.

Wenn das erfindungsgemäße Rechenwerk für verschlüsselte Operanden eingesetzt wird, ist es insbesondere dahingehend vorteilhaft, daß aus den verschlüsselten Operanden ein verschlüsseltes Ergebnis berechnet wird, ohne daß an irgendeiner Stelle Klartextdaten berechnet werden. Damit wird eine hohe Sicherheit gegenüber physikalischen Angriffen, wie z. B. Sondennadeln) und Side-Channel-Angriffen, wie z. B. DPA (DPA = Differential Power Analysis) oder SPA (SPA = Single Power Analysis) erreicht. Wenn unterschiedliche Operanden mit unterschiedlichen Schlüsseln verschlüsselt werden, ist ferner der Schlüsselgenerator eines solchen Rechenwerks als lokalisierter Angriffspunkt (Single Point of Attack) eliminiert, da ein Angreifer für eine Entschlüsselung nicht nur einen einzigen Schlüsselgenerator deaktivieren müßte, sondern beide Schlüsselgeneratoren bzw. noch einen weiteren Schlüsselgenerator, wenn auch das Ergebnis unabhängig verschlüsselt wird. Es hat sich jedoch herausgestellt, daß es ein vertretbarer Kompromiß zwischen Sicherheit und Aufwand ist, daß die Ergebnisdaten mit einem Verschlüsselungsparameter verschlüsselt sind, der eine Kombination aus den Verschlüsselungsparametern für die beiden Eingangsdaten ist.

Bezugszeichenliste

| | |
|---|---|
| 10 | erster Addierereingang |
| 12 | zweiter Addierereingang |
| 14 | dritter Addierereingang |
| 16 | erster Addiererausgang |
| 18 | zweiter Addiererausgang |
| 20 | dritter Addiererausgang |
| 31 | erstes XOR-Gatter |
| 32 | erstes NOT-Gatter |
| 33 | zweites XOR-Gatter |
| 34 | erstes UND-Gatter |
| 35 | zweites UND-Gatter |
| 36 | drittes UND-Gatter |
| 37 | erstes OR-Gatter |
| 38 | zweites OR-Gatter |
| 39 | zweites NOT-Gatter |
| 301 | Bit-Slice für das Bit n+1 |
| 302 | Bit-Slice für das Bit n |
| 303 | Ein-Bit-Volladdierer für das Bit n+1 |
| 304 | Ein-Bit-Volladdierer für das Bit n |
| 305 | Eingangs-Multiplexer für das Bit n+1 |
| 306 | Ausgangs-Multiplexer für das Bit n+1 |
| 307 | Eingangs-Multiplexer für das Bit n |
| 308 | Ausgangs-Multiplexer für das Bit n |
| 310 | erster Eingangsmultiplexer-Eingang |
| 312 | zweiter Eingangsmultiplexer-Eingang |
| 314 | dritter Eingangsmultiplexer-Eingang |
| 316 | Eingangsmultiplexer-Steuerleitung |
| 318 | Eingangsmultiplexer-Ausgang |
| 320 | erster Ausgangsmultiplexer-Eingang |
| 322 | zweiter Ausgangsmultiplexer-Eingang |
| 324 | dritter Ausgangsmultiplexer-Eingang |
| 326 | Ausgangsmultiplexer-Ausgang |
| 328 | Ausgangsmultiplexer-Steuerleitung |
| 340 | XOR-Gatter |
| 342 | XOR-Gatter |
| 344 | Register für den aktuellen Stößel des Bit-Slices |
| 346 | Register für den Umverschlüsselungs-Schlüssel des aktuellen Bit-Slices |
| 348 | Schreiben-Freigabeleitung |
| 700 | erstes XOR-Gatter zum Verknüpfen des ersten Operanden mit dem Verschlüsselungsparameter des zweiten Operanden |
| 702 | zweites XOR-Gatter zum Verknüpfen des zweiten Operanden mit dem Verschlüsselungsparameter für den ersten Operanden |
| 704 | drittes XOR-Gatter für eine Verknüpfung des ersten Verschlüsselungsparameters und des zweiten Verschlüsselungsparameters |
| 706 | Leitung zum Eingeben des aktuellen Umverschlüsselungsparameters |
| 708 | zusätzlicher Eingangs-Multiplexer für die Subtraktion |
| 1000 | Verschlüsselungsvorschrift |

1002    verschlüsselte ODER-Operation
1004    verschlüsselter Volladdierer (FA)

**Patentansprüche**

**1.**  Rechenwerk mit folgenden Merkmalen:

einem ersten Eingang (10) für ein erstes Rechenwerkeingangssignal $\bar{x}$;

einem zweiten Eingang (12) für ein zweites Rechenwerkeingangssignal $\bar{y}$;

einem dritten Eingang (14) für ein drittes Rechenwerkeingangssignal z;

einem ersten Ausgang (16) für ein erstes Rechenwerkausgangssignal s, wobei das erste Rechenwerkausgangssignals s durch folgende Gleichung gegeben ist:

$$s = \bar{x} \oplus \bar{y} \oplus \bar{z}$$

einem zweiten Ausgang (18) für ein zweites Rechenwerkausgangssignal $\bar{c}$, die durch folgende Gleichung gegeben ist:

$$\bar{c} = NOT(\bar{x} \cdot \bar{y} + z \cdot \bar{x} + \bar{z} \cdot \bar{y}),$$

wobei "·" eine logische UND-Operation darstellt, wobei $\oplus$ eine logische XOR-Operation darstellt, wobei "+" eine logische ODER-Operation darstellt, und wobei NOT eine Negation darstellt,
**gekennzeichnet durch**
einen Eingang für einen Verschlüsselungsparameter,
wobei dem ersten oder zweiten Eingang (10, 12) zumindest ein verschlüsselter Operand einer mathematischen Operation zuführbar ist, der unter Verwendung eines Verschlüsselungsalgorithmus und eines Verschlüsselungsparameters aus einem entsprechenden unverschlüsselten Operanden abgeleitet ist, wobei der Verschlüsselungsalgorithmus eine XOR- oder XNOR-Verknüpfung umfasst, und
einen Eingangs-Multiplexer (305) mit einem ersten Eingangsmultiplexer-Eingang, der mit dem Schlüsseleingang gekoppelt ist, einem zweiten Eingangsmultiplexer-Eingang, der mit einem negierten Schlüssel gekoppelt ist, und einem Eingangsmultiplexer-Ausgang, der mit dem dritten Eingang (14) gekoppelt ist,
wobei der Eingangs-Multiplexer **durch** ein Eingangsmultiplexer-Steuersignal (316) steuerbar ist, um entweder ein Signal an dem ersten Eingangsmultiplexer-Eingang oder ein Signal an dem zweiten Eingangsmultiplexer-Eingang an den Eingangsmultiplexer-Ausgang anzulegen.

**2.**  Rechenwerk nach Anspruch 1,
bei dem das erste Ausgangssignal s ein Summenbit darstellt,
bei dem das zweite Ausgangssignal $\bar{c}$ ein negiertes Carry-Bit darstellt,
bei dem der erste, zweite und dritte Eingang (10, 12, 14) und der erste und der zweite Ausgang (16, 18) einen ersten Ein-Bit-Volladdierer (304) darstellen, und
bei dem ferner ein zweiter Ein-Bit-Volladdierer (303) für ein höherwertiges Bit angeordnet ist, der zu dem ersten Ein-Bit-Volladdierer identisch ist, und dessen dritter Eingang (318) mit dem zweiten Ausgang des ersten Ein-Bit-Volladdierers (304) verbunden ist.

**3.**  Rechenwerk nach Anspruch 1 oder 2, das ferner einen dritten Ausgang (20) für ein drittes Rechenwerkausgangssignal c aufweist, das eine negierte Version des zweiten Ausgangssignals $\bar{c}$ ist.

**4.**  Rechenwerk nach Anspruch 3, das ferner einen Ausgangs-Multiplexer aufweist, der folgende Merkmale aufweist:

einen ersten Ausgangsmultiplexer-Eingang (320) für das erste Rechenwerkausgangssignal s;

einen zweiten Ausgangsmultiplexer-Eingang (322) für das dritte Rechenwerkausgangssignal c;

einen dritten Ausgangsmultiplexer-Eingang (324) für das zweite Rechenwerkausgangssignal $\bar{c}$; und

einen Ausgangsmultiplexer-Ausgang (326) für einen Ergebniswert,

wobei an dem Ausgangs-Multiplexer (306) ein Ausgangs-Steuersignal (m2) anlegbar ist,
wobei an den dritten Eingang (14) eine logische "1" oder eine logische "0" anlegbar ist,
wobei, falls an den dritten Eingang (14) eine logische "0" anlegbar ist,
    der Ausgangs-Multiplexer (306) steuerbar ist, um den ersten Ausgang auszuwählen, um eine XNOR-Verknüpfung des ersten Rechenwerkeingangssignals und des zweiten Rechenwerkeingangssignals zu erhalten,
    der Ausgangs-Multiplexer steuerbar ist, um das dritte Ausgangssignal c auszuwählen, um eine NOR-Verknüpfung des ersten und des zweiten Rechenwerkeingangssignals zu erhalten;
    der Ausgangs-Multiplexer steuerbar ist, um das zweite Ausgangssignal $\bar{c}$ auszuwählen, um eine ODER-Verknüpfung des ersten und des zweiten Rechenwerkeingangssignals zu erhalten,
wobei der Ausgangs-Multiplexer (322) steuerbar ist, um den dritten Ausgang auszuwählen, und wobei das erste Rechenwerkeingangssignal ferner an den zweiten Eingang (12) anlegbar ist, um eine negierte Version des ersten Rechenwerkeingangssignals zu erhalten,
wobei, falls an dem dritten Eingang (14) eine logische "1" (Eins) anlegbar ist, der Ausgangs-Multiplexer steuerbar ist, um den ersten Ausgang s auszuwählen, um eine XOR-Verknüpfung des ersten und des zweiten Rechenwerkeingangssignals zu erhalten,
    der Ausgangs-Multiplexer steuerbar ist, um den zweiten Ausgang $\bar{c}$ auszuwählen, um eine UND-Verknüpfung des ersten und des zweiten Rechenwerkeingangssignals zu erhalten, und
        der Ausgangs-Multiplexer (303) steuerbar ist, um den dritten Ausgang (20) auszuwählen, um eine NAND-Verknüpfung des ersten und des zweiten Rechenwerkeingangssignals zu erhalten.

**5.** Rechenwerk nach Patentanspruch 4, bei dem ein Inverter (710) vorhanden ist, um eine invertierte Version des zweiten Rechenwerkeingangssignals zu erzeugen, wobei die invertierte Version des zweiten Rechenwerkeingangssignals dem zweiten Eingang (12) zuführbar ist, und wobei ein Übertragsignal aus einer vorhergehenden Stufe dem dritten Eingang (14) in invertiertem Zustand zuführbar ist.

**6.** Rechenwerk nach Patentanspruch 1, bei dem der Eingangs-Multiplexer (305) ferner einen dritten Eingangsmultiplexer-Eingang (314) aufweist, der mit einem Ausgang einer Umverschlüsselungseinrichtung (342) gekoppelt ist, die unter Verwendung eines Umverschlüsselungs-Schlüssels, der sich aus einer Kombination eines Schlüssels für ein Bit einer Ordnung n + 1 und eines Schlüssels für ein Bit einer Ordnung n ergibt, eine Umverschlüsselung eines Übertragsignals einer Addiererstufe für das Bit der Ordnung n durchführen kann.

**7.** Rechenwerk nach Patentanspruch 1 oder 6,
bei dem der Eingangs-Multiplexer (305) steuerbar ist, um an den dritten Eingang (14) den invertierten Verschlüsselungsparameter anzulegen, und bei dem der Ausgangs-Multiplexer steuerbar ist, um das erste Rechenwerkausgangssignal auszugeben, das einem verschlüsselten Ergebnis einer XOR-Operation zweier verschlüsselter Operanden entspricht,
bei dem der Eingangs-Multiplexer (305) steuerbar ist, um den Verschlüsselungsparameter an den dritten Eingang (14) anzulegen, und bei dem der Ausgangsmultiplexer (322) steuerbar ist, um das zweite Rechenwerkausgangssignal auszugeben, das einem verschlüsselten Ergebnis einer XNOR-Operation zweier verschlüsselter Operanden entspricht;
bei dem der Eingangs-Multiplexer (305) steuerbar ist, um den Verschlüsselungsparameter an dem dritten Eingang (14) anzulegen, und bei dem der Ausgangsmultiplexer (322) steuerbar ist, um das dritte Rechenwerkausgangssignal auszugeben, das einem verschlüsselten Ergebnis einer NOR-Operation zweier verschlüsselter Eingangsoperanden entspricht;
bei dem der Eingangs-Multiplexer (305) steuerbar ist, um einen invertierten Verschlüsselungsparameter in den dritten Eingang (14) einzuspeisen, und bei dem der Ausgangs-Multiplexer (322) steuerbar ist, um das dritte Rechenwerkausgangssignal auszugeben, das einer verschlüsselten Version einer NAND-Verknüpfung zweier verschlüsselter Operanden entspricht;
bei dem der Eingangs-Multiplexer (305) steuerbar ist, um den Verschlüsselungsparameter in den dritten Eingang (14) einzuspeisen, bei dem der Ausgangs-Multiplexer (322) steuerbar ist, um das zweite Rechenwerkausgangssignal auszugeben, das einem verschlüsselten Ergebnis einer ODER-Operation zweier verschlüsselter Eingangsoperanden entspricht;
bei dem der Eingangs-Multiplexer (305) steuerbar ist, um einen invertierten Verschlüsselungsparameter an den dritten Addiereingang anzulegen, bei dem der Ausgangs-Multiplexer (322) steuerbar ist, um das zweite Rechenwerkausgangssignal auszugeben, das einem verschlüsselten Ergebnis einer UND-Operation zweier verschlüsselter Operanden entspricht; oder

bei dem der Eingangs-Multiplexer angeordnet ist, um den Verschlüsselungsparameter dem dritten Eingang (14) zuzuführen, bei dem dem zweiten Eingang (12) ebenfalls wie dem ersten Eingang (10) der erste verschlüsselte Operand zugeführt wird, und bei dem der Ausgangs-Multiplexer (322) angeordnet ist, um das dritte Rechenwerkausgangssignal auszugeben, das einem verschlüsselten Ergebnis einer NOT-Operation mit dem ersten verschlüsselten Operanden ist.

**8.** Rechenwerk nach einem der Ansprüche 1 bis 7,
bei dem der erste, zweite und dritte Eingang (10, 12, 14) und der erste und der zweite Ausgang (16, 18) einen Ein-Bit-Volladdierer für ein Bit n bilden, das mit einem Schlüssel $k_n$ verschlüsselt ist,
bei dem ein weiterer Ein-Bit-Volladdierer (303) für ein Bit n+1, das mit einem Schlüssel $k_{n+1}$ verschlüsselt ist, vorhanden ist, der identisch zu dem Ein-Bit-Volladdierer für das Bit n ist,
wobei an dem dritten Eingang (14) des Ein-Bit-Volladdierers für das Bit n+1 ein Signal anlegbar ist, das durch folgende Gleichung gegeben ist:

$$z_{n+1} = \bar{c}_n \oplus (k_n \oplus k_{n+1})$$

wobei $z_{n+1}$ ein mit dem Schlüssel $k_{n+1}$ verschlüsseltes Übertragbit des Ein-Bit-Volladdierers für das Bit n ist, wobei $\bar{c}_n$ das Übertragbit des Ein-Bit-Volladdierers für das Bit n, verschlüsselt mit dem Verschlüsselungsparameter $k_n$ ist, wobei $k_n$ der Verschlüsselungsparameter für das Bit n ist, wobei $k_{n+1}$ der Verschlüsselungsparameter für das Bit n+1 ist, und wobei $\oplus$ eine XOR-Verknüpfung darstellt.

**9.** Rechenwerk nach Anspruch 8, bei dem eine XOR-Verknüpfung des Schlüssels $k_n$ für das Bit n und des Schlüssels $k_{n+1}$ für das Bit n+1 außerhalb eines Bit-Slices (301) für das Bit n+1 berechenbar ist.

**10.** Rechenwerk nach einem der Ansprüche 1 bis 5, das für eine mathematische Operation auf zwei Operanden vorgesehen ist, wobei die zwei Operanden unter Verwendung eines ersten und eines zweiten Verschlüsselungsparameters (i, j) verschlüsselt sind, wobei der erste und der zweite Verschlüsselungsparameter unterschiedlich sind, wobei der Eingang für einen Verschlüsselungsparameter für den ersten Verschlüsselungsparameter (i) vorgesehen ist, wobei das Rechenwerk ferner folgende Merkmale aufweist:

einen weiteren Eingang für den zweiten Verschlüsselungsparameter (j);

ein XOR-Gatter (700) zum Verknüpfen des verschlüsselten ersten Operanden (a) mit dem zweiten Schlüssel (j), um das erste Rechenwerkeingangssignal zu liefern; und

ein XOR-Gatter (702) zum Verknüpfen des verschlüsselten zweiten Operanden (b) mit dem ersten Schlüssel (i), um das zweite Rechenwerkeingangssignal zu liefern.

**11.** Rechenwerk nach Anspruch 10, , wobei an den ersten Eingangsmultiplexer-Eingang eine XOR-Verknüpfung des ersten Verschlüsselungsparameters (i) und des zweiten Verschlüsselungsparameters (j) als der Verschlüsselungsparameter anlegbar ist, und wobei an den zweiten Eingangsmultiplexer-Eingang eine negierte Version der XOR-Verknüpfung des ersten Verschlüsselungsparameters (i) und des zweiten Verschlüsselungsparameters (j) als negierter Schlüssel anlegbar ist.

**12.** Rechenwerk nach Anspruch 10 oder 11, bei dem der erste bis dritte Eingang (10, 12, 14) und der erste und der zweite Ausgang (16, 18) einen Ein-Bit-Volladdierer für einen Bit-Slice n bilden, für den ein erster und ein zweiter Verschlüsselungsparameter $i_n$ und $j_n$ vorgesehen sind,
bei dem ein weiterer Ein-Bit-Volladdierer für einen Bit-Slice n+1 vorhanden ist, für den ein erster Verschlüsselungsparameter $i_{n+1}$ und ein zweiter Verschlüsselungsparameter $j_{n+1}$ vorgesehen sind, wobei der weitere Ein-Bit-Volladdierer für den Bit-Slice n+1 identisch zu dem Ein-Bit-Volladdierer für den Bit-Slice n ist,
wobei an den dritten Eingang (14) des Ein-Bit-Volladdierers für den Bit-Slice n+1 ein Signal anlegbar ist, das durch folgende Gleichungen gegeben ist:

$$z_{n+1} = t_{n+1} \oplus c_n; \ t_{n+1} = k_n \oplus k_{n+1}; \ k_n = i_n \oplus j_n; \ k_{n+1} = i_{n+1} \oplus j_{n+1};$$

wobei $z_{n+1}$ das dritte Rechenwerkeingangssignal für den Bit-Slice n+1 darstellt, wobei $t_{n+1}$ einen Umverschlüsselungsparameter für den Bit-Slice n+1 darstellt, wobei $k_n$ einer XOR-Verknüpfung des ersten und des zweiten Verschlüsselungsparameters für den Bit-Slice n entspricht, und wobei $k_{n+1}$ einer XOR-Verknüpfung des ersten und des zweiten Verschlüsselungsparameters für den Bit-Slice n+1 entspricht.

13. Verfahren zum Kombinieren eines ersten Operanden (a) und eines zweiten Operanden (b), mit folgenden Schritten:

Berechnen eines Zwischen-Summenbits s durch folgende Gleichung:

$$s = \bar{x} \oplus \bar{y} \oplus \bar{z};$$

und
Berechnen eines negierten Übertragbits $\bar{c}$ durch folgende Gleichung:

$$\bar{c} = NOT(\bar{x} \cdot \bar{y} + z \cdot \bar{x} + z \cdot \bar{y}),$$

wobei "·" eine logische UND-Operation darstellt, wobei $\oplus$ eine logische XOR-Operation darstellt, wobei "+" eine logische ODER-Operation darstellt, wobei NOT eine Negation darstellt,
wobei $\bar{x}$ eine negierte Version des ersten Operanden darstellt, wobei $\bar{y}$ eine negierte Version des zweiten Operanden darstellt, wobei z ein Kombinationssteuersignal ist, und wobei $\bar{z}$ ein invertiertes Kombinationssteuersignal ist,
**dadurch gekennzeichnet, dass**
unter dem ersten und dem zweiten Operanden zumindest ein verschlüsselter Operand einer mathematischen Operation ist, der unter Verwendung eines Verschlüsselungsalgorithmus und eines Verschlüsselungsparameters aus einem entsprechenden unverschlüsselten Operanden abgeleitet ist, wobei der Verschlüsselungsalgorithmus eine XOR- oder XNOR-Verknüpfung umfasst,
und abhängig von einem Steuersignal (316) entweder ein Verschlüsselungspärameter oder ein negierter Schlüssel als Kombinationssteuersignal verwendet wird.


**Claims**

1. Calculating unit comprising:

a first input (10) for a first calculating unit input signal $\bar{x}$;

a second input (12) for a second calculating unit input signal $\bar{y}$;

a third input (14) for a third calculating unit input signal z;

a first output (16) for a first calculating unit output signal s, wherein the first calculating unit output signal s is given by the following equation:

$$s = \bar{x} \oplus \bar{y} \oplus \bar{z}$$

a second output (18) for a second calculating unit output signal c given by the following equation:

$$\bar{c} = NOT(\bar{x} \cdot \bar{y} + z \cdot \bar{x} + z \cdot \bar{y}),$$

wherein "·" represents a logical AND operation, wherein $\oplus$ represents a logical XOR operation, wherein "+" represents a logical OR operation, and wherein NOT represents a negation,
**characterized by**
an input for an encryption parameter,
wherein at least one encrypted operand of a mathematical operation is suppliable to the first or second input (10, 12), the operand being derived from a corresponding unencrypted operand using an encryption algorithm and an encryption parameter, wherein the encryption algorithm includes an XOR or XNOR operation, and
an input multiplexer (305) with a first input multiplexer input coupled to the key input, a second input multiplexer input coupled to a negated key, and an input multiplexer output coupled to the third input (14), wherein the input multiplexer is controllable by an input multiplexer control signal (316) to apply either a signal at the first input multiplexer input or a signal at the second input multiplexer input to the input multiplexer output.

2. Calculating unit of claim 1,
wherein the first output signal s represents a sum bit,
wherein the second output signal $\bar{c}$ represents a negated carry bit,
wherein the first, second and third inputs (10, 12, 14) and the first and the second output (16, 18) represent a first one-bit full adder (304), and
wherein further a second one-bit full adder (303) is arranged for a more significant bit, which is identical to the first one-bit full adder and whose third input (318) is connected to the second output of the first one-bit full adder (304).

3. Calculating unit of claim 1 or 2, further comprising a third output (20) for a third calculating unit output signal c which is a negated version of the second output signal $\bar{c}$.

4. Calculating unit of claim 3, further comprising an output multiplexer comprising:

a first output multiplexer input (320) for the first calculating unit output signal s;

a second output multiplexer input (322) for the third calculating unit output signal c;

a third output multiplexer input (324) for the second calculating unit output signal $\bar{c}$; and

an output multiplexer output (326) for a result value,

wherein an output control signal (m2) is appliable to the output multiplexer (306),
wherein a logical "1" or a logical "0" is appliable to the third input (14),
wherein, if a logical "0" is appliable to the third input (14),
the output multiplexer (306) is controllable to select the first output to obtain an XNOR operation between the first calculating unit input signal and the second calculating unit input signal,
the output multiplexer is controllable to select the third output signal c to obtain a NOR operation between the first and the second calculating unit input signals;
the output multiplexer is controllable to select the second output signal c to obtain an OR operation between the first and the second calculating unit input signals,
wherein the output multiplexer (322) is controllable to select the third output, and wherein the first calculating unit input signal is further appliable to the second input (12) to obtain a negated version of the first calculating unit input signal,
wherein, if a logical "1" (one) is appliable to the third input (14), the output multiplexer is controllable to select the first output s to obtain an XOR operation between the first and the second calculating unit input signals,
the output multiplexer is controllable to select the second output c to obtain an AND operation between the first and the second calculating unit input signals, and
the output multiplexer (303) is controllable to select the third output (20) to obtain a NAND operation between the first and the second calculating unit input signals.

5. Calculating unit of claim 4, wherein there is an inverter (710) to generate an inverted version of the second calculating unit input signal, wherein the inverted version of the second calculating unit input signal is suppliable to the second input (12), and wherein a carry signal from a previous stage is suppliable to the third input (14) in an inverted state.

6. Calculating unit of claim 1, wherein the input multiplexer (305) further comprises a third input multiplexer input (314) coupled to an output of re-encryption means (342) which, using a re-encryption key resulting from a combination of a key for a bit of an order n + 1 and a key for a bit of an order n, is able to perform a re-encryption of a carry signal of an adder stage for the bit of the order n.

7. Calculating unit of claim 1 or 6,

wherein the input multiplexer (305) is controllable to apply the inverted encryption parameter to the third input (14), and wherein the output multiplexer is controllable to output the first calculating unit output signal corresponding to an encrypted result of an XOR operation of two encrypted operands,

wherein the input multiplexer (305) is controllable to apply the encryption parameter to the third input (14), and wherein the output multiplexer (322) is controllable to output the second calculating unit output signal corresponding to an encrypted result of an XNOR operation of two encrypted operands;

wherein the input multiplexer (305) is controllable to apply the encryption parameter to the third input (14), and wherein the output multiplexer (322) is controllable to output the third calculating unit output signal corresponding to an encrypted result of a NOR operation of two encrypted input operands;

wherein the input multiplexer (305) is controllable to feed an inverted encryption parameter to the third input (14), and wherein the output multiplexer (322) is controllable to output the third calculating unit output signal corresponding to an encrypted version of a NAND operation between two encrypted operands;

wherein the input multiplexer (305) is controllable to feed the encryption parameter to the third input (14), wherein the output multiplexer (322) is controllable to output the second calculating unit output signal corresponding to an encrypted result of an OR operation of two encrypted input operands;

wherein the input multiplexer (305) is controllable to apply an inverted encryption parameter to the third adding input, wherein the output multiplexer (322) is controllable to output the second calculating unit output signal corresponding to an encrypted result of an AND operation of two encrypted operands; or

wherein the input multiplexer is arranged to supply the encryption parameter to the third input (14), wherein the first encrypted operand is supplied to the second input (12) as well as to the first input (10), and wherein the output multiplexer (322) is arranged to output the third calculating unit output signal corresponding to an encrypted result of a NOT operation with the first encrypted operand.

8. Calculating unit according one of claims 1 to 7,

wherein the first, second and third inputs (10, 12, 14) and the first and the second output (16, 18) form a one-bit full adder for a bit n encrypted with a key $k_n$,

wherein there is a further one-bit full adder (303) for a bit n+1 encrypted with a key $k_{n+1}$, which is identical to the one-bit full adder for the bit n,

wherein a signal is appliable to the third input (14) of the one-bit full adder for the bit n+1, the signal being given by the following equation:

$$z_{n+1} = \bar{c}_n \oplus (k_n \oplus k_{n+1})$$

wherein $z_{n+1}$ is a carry bit of the one-bit full adder for the bit n encrypted with the key $k_{n+1}$, wherein $\bar{c}_n$ is the carry bit of the one-bit full adder for the bit n encrypted with the encryption parameter $k_n$, wherein $k_n$ is the encryption parameter for the bit n, wherein $k_{n+1}$ is the encryption parameter for the bit n+1, and wherein $\oplus$ represents an XOR operation.

9. Calculating unit of claim 8, wherein an XOR operation between the key $k_n$ for the bit n and the key $k_{n+1}$ for the bit n+1 is calculable external to a bit slice (301) for the bit n+1.

10. Calculating unit according to one of claims 1 to 5 provided for a mathematical operation on two operands, wherein the two operands are encrypted using a first and a second encryption parameter (i, j), wherein the first and the second encryption parameters differ, wherein the input for an encryption parameter is provided for the first encryption parameter (i), wherein the calculating unit further comprises:

a further input for the second encryption parameter (j);

an XOR gate (700) for linking the encrypted first operand (a) to the second key (j) to provide the first calculating unit input signal; and

an XOR gate (702) for linking the encrypted second operand (b) to the first key (i) to provide the second calculating unit input signal.

11. Calculating unit of claim 10, wherein an XOR operation between the first encryption parameter (i) and the second encryption parameter (j) is appliable to the first input multiplexer input as the encryption parameter, and wherein a negated version of the XOR operation between the first encryption parameter (i) and the second encryption parameter (j) is appliable to the second input multiplexer input as negated key.

**12.** Calculating unit of claim 10 or 11, wherein the first through third inputs (10, 12, 14) and the first and the second output (16, 18) form a one-bit full adder for a bit slice n for which there are provided a first and a second encryption parameter $i_n$ and $j_n$, wherein there is a further one-bit full adder for a bit slice n+1 for which there are provided a first encryption parameter $i_{n+1}$ and a second encryption parameter $j_{n+1}$, wherein the further one-bit full adder for the bit slice n+1 is identical to the one-bit full adder for the bit slice n, wherein a signal is appliable to the third input (14) of the one-bit full adder for the bit slice n+1, the signal being given by the following equation:

$$z_{n+1} = t_{n+1} \oplus c_n; \; t_{n+1} = k_n \oplus k_{n+1}; \; k_n = i_n \oplus j_n; \; k_{n+1} = i_{n+1} = \oplus j_{n+1};$$

wherein $z_{n+1}$ represents the third calculating unit input signal for the bit slice n+1, wherein $t_{n+1}$ represents a re-encryption parameter for the bit slice n+1, wherein $k_n$ corresponds to an XOR operation between the first and the second encryption parameters for the bit slice n, and wherein $k_{n+1}$ corresponds to an XOR operation between the first and the second encryption parameters for the bit slice n+1.

**13.** Method for combining a first operand (a) and a second operand (b), comprising:

calculating an intermediate sum bit s by the following equation:

$$s = \bar{x} \oplus \bar{y} \oplus \bar{z};$$

and
calculating a negated carry bit c by the following equation:

$$\bar{c} = \mathrm{NOT}(\bar{x} \cdot \bar{y} + z \cdot \bar{x} + z \cdot \bar{y})$$

wherein "·" represents a logical AND operation, wherein $\oplus$ represents a logical XOR operation, wherein "+" represents a logical OR operation, wherein NOT represents a negation, wherein $\bar{x}$ represents a negated version of the first operand, wherein $\bar{y}$ represents a negated version of the second operand, wherein z is a combination control signal, and wherein $\bar{z}$ is an inverted combination control signal,
**characterized in that**
there is at least one encrypted operand of a mathematical operation among the first and the second operands which is derived from a corresponding unencrypted operand using an encryption algorithm and an encryption parameter, wherein the encryption algorithm includes an XOR or XNOR operation,
and, depending on a control signal (316), either an encryption parameter or a negated key is used as combination control signal.

**Revendications**

**1.** Unité arithmétique ayant les caractéristiques suivantes :

une première entrée (10) pour un premier signal d'entrée d'unité arithmétique $\bar{x}$ ;
une deuxième entrée (12) pour un deuxième signal d'entrée d'unité arithmétique $\bar{y}$ ;
une troisième entrée (14) pour un troisième signal d'entrée d'unité arithmétique z ;
une première sortie (16) pour un premier signal de sortie d'unité arithmétique s, le premier signal de sortie d'unité arithmétique s étant donné par l'équation suivante :

$$s = \bar{x} \oplus \bar{y} \oplus \bar{z} ;$$

une deuxième sortie (18) pour un deuxième signal de sortie d'unité arithmétique c qui est donné par l'équation suivante :

$$\bar{c} = NOT\ (\bar{x} \cdot \bar{y} + z \cdot \bar{x} + z \cdot \bar{y})\ ;$$

"·" représentant une opération ET logique, $\oplus$ représentant une opération XOR logique, "+" représentant une opération OU logique et NOT représentant une négation ;

**caractérisée par**

une entrée pour un paramètre de cryptage,

la première ou la deuxième entrée (10, 12) pouvant recevoir au moins un opérande crypté d'une opération mathématique qui est déduit d'un opérande non crypté correspondant en utilisant un algorithme de cryptage et un paramètre de cryptage, l'algorithme de cryptage comprenant une combinaison XOR ou XNOR, et

un multiplexeur d'entrée (305) avec une première entrée de multiplexeur d'entrée qui est reliée à l'entrée de clé, avec une deuxième entrée de multiplexeur d'entrée qui est reliée à une clé inversée logiquement et avec une sortie de multiplexeur d'entrée qui est reliée à la troisième entrée (14),

le multiplexeur d'entrée pouvant être commandé par un signal de commande de multiplexeur d'entrée (316) pour appliquer à la sortie de multiplexeur d'entrée soit un signal de la première entrée de multiplexeur d'entrée soit un signal de la deuxième entrée de multiplexeur d'entrée.

2. Unité arithmétique selon la revendication 1,

dans laquelle le premier signal de sortie s représente un bit de somme,

dans laquelle le deuxième signal de sortie $\bar{c}$ représente un bit de retenue inversé logiquement,

dans laquelle la première, la deuxième et la troisième entrée (10, 12, 14) et la première et la deuxième sortie (16, 18) représentent un premier additionneur complet à un bit (304), et

dans laquelle il est agencé en plus un deuxième additionneur complet à un bit (303) qui est destiné à un bit de poids supérieur, qui est identique au premier additionneur complet à un bit et dont la troisième entrée (318) est reliée à la deuxième sortie du premier additionneur complet à un bit (304).

3. Unité arithmétique selon la revendication 1 ou 2, qui comporte en plus une troisième sortie (20) pour un troisième signal de sortie d'unité arithmétique c qui est une version inversée logiquement du deuxième signal de sortie $\bar{c}$.

4. Unité arithmétique selon la revendication 3, qui comporte en plus un multiplexeur de sortie qui a les caractéristiques suivantes :

une première entrée de multiplexeur de sortie (320) pour le premier signal de sortie d'unité arithmétique s ;

une deuxième entrée de multiplexeur de sortie (322) pour le troisième signal de sortie d'unité arithmétique c ;

une troisième entrée de multiplexeur de sortie (324) pour le deuxième signal de sortie d'unité arithmétique $\bar{c}$ ; et

une sortie de multiplexeur de sortie (326) pour une valeur de résultat,

un signal de commande de sortie (m2) pouvant être appliqué au multiplexeur de sortie (306),

un "1" logique ou un "0" logique pouvant être appliqué à la troisième entrée (14),

si un "0" logique peut être appliqué à la troisième entrée (14),

le multiplexeur de sortie (306) pouvant être commandé pour sélectionner la première sortie pour obtenir une combinaison XNOR du premier signal d'entrée d'unité arithmétique et du deuxième signal d'entrée d'unité arithmétique,

le multiplexeur de sortie pouvant être commandé pour sélectionner le troisième signal de sortie c pour obtenir une combinaison NOR du premier et du deuxième signal d'entrée d'unité arithmétique,

le multiplexeur de sortie pouvant être commandé pour sélectionner le deuxième signal de sortie $\bar{c}$ pour obtenir une combinaison OU du premier et du deuxième signal d'entrée d'unité arithmétique,

le multiplexeur de sortie (322) pouvant être commandé pour sélectionner la troisième sortie et le premier signal d'entrée d'unité arithmétique pouvant être appliqué en plus à la deuxième entrée (12) pour obtenir une version inversée logiquement du premier signal d'entrée d'unité arithmétique,

si un "1" (un) logique peut être appliqué à la troisième entrée (14),

le multiplexeur de sortie pouvant être commandé pour sélectionner la première sortie s pour obtenir une combinaison XOR du premier et du deuxième signal d'entrée d'unité arithmétique,

le multiplexeur de sortie pouvant être commandé pour sélectionner la deuxième sortie $\bar{c}$ pour obtenir une combinaison ET du premier et du deuxième signal d'entrée d'unité arithmétique, et

le multiplexeur de sortie (303) pouvant être commandé pour sélectionner la troisième sortie (20) pour obtenir une combinaison NAND du premier et du deuxième signal d'entrée d'unité arithmétique.

**5.** Unité arithmétique selon la revendication 4, dans laquelle un inverseur (710) est prévu pour produire une version inversée du deuxième signal d'entrée d'unité arithmétique, la version inversée du deuxième signal d'entrée d'unité arithmétique pouvant être envoyée à la deuxième entrée (12) et un signal de retenue issu d'un étage précédent pouvant être envoyé à l'état inversé à la troisième entrée (14).

**6.** Unité arithmétique selon la revendication 1, dans laquelle le multiplexeur d'entrée (305) comporte en plus une troisième entrée de multiplexeur d'entrée (314) qui est reliée à une sortie d'un dispositif de recryptage (342) qui peut effectuer, en utilisant une clé de recryptage qui résulte d'une combinaison d'une clé pour un bit d'ordre n + 1 et d'une clé pour un bit d'ordre n, un recryptage d'un signal de retenue d'un étage d'addition pour le bit d'ordre n.

**7.** Unité arithmétique selon la revendication 1 ou 6,
dans laquelle le multiplexeur d'entrée (305) peut être commandé pour appliquer à la troisième entrée (14) le paramètre de cryptage inversé et dans laquelle le multiplexeur de sortie peut être commandé pour fournir le premier signal de sortie d'unité arithmétique qui correspond à un résultat crypté d'une opération XOR de deux opérandes cryptés ;
dans laquelle le multiplexeur d'entrée (305) peut être commandé pour appliquer à la troisième entrée (14) le paramètre de cryptage et dans laquelle le multiplexeur de sortie (322) peut être commandé pour fournir le deuxième signal de sortie d'unité arithmétique qui correspond à un résultat crypté d'une opération XNOR de deux opérandes cryptés ;
dans laquelle le multiplexeur d'entrée (305) peut être commandé pour appliquer à la troisième entrée (14) le paramètre de cryptage et dans laquelle le multiplexeur de sortie (322) peut être commandé pour fournir le troisième signal de sortie d'unité arithmétique qui correspond à un résultat crypté d'une opération NOR de deux opérandes d'entrée cryptés ;
dans laquelle le multiplexeur d'entrée (305) peut être commandé pour appliquer à la troisième entrée (14) un paramètre de cryptage inversé et dans laquelle le multiplexeur de sortie (322) peut être commandé pour fournir le troisième signal de sortie d'unité arithmétique qui correspond à une version cryptée d'une opération NAND de deux opérandes cryptés ;
dans laquelle le multiplexeur d'entrée (305) peut être commandé pour appliquer à la troisième entrée (14) le paramètre de cryptage et dans laquelle le multiplexeur de sortie (322) peut être commandé pour fournir le deuxième signal de sortie d'unité arithmétique qui correspond à un résultat crypté d'une opération OU de deux opérandes d'entrée cryptés ;
dans laquelle le multiplexeur d'entrée (305) peut être commandé pour appliquer à la troisième entrée d'additionneur un paramètre de cryptage inversé et dans laquelle le multiplexeur de sortie (322) peut être commandé pour fournir le deuxième signal de sortie d'unité arithmétique qui correspond à un résultat crypté d'une opération ET de deux opérandes cryptés ; ou
dans laquelle le multiplexeur d'entrée est agencé pour envoyer le paramètre de cryptage à la troisième entrée (14), dans laquelle le premier opérande crypté est envoyé à la deuxième entrée (12) comme à la première entrée (10) et dans laquelle le multiplexeur de sortie (322) est agencé pour fournir le troisième signal de sortie d'unité arithmétique qui correspond à un résultat crypté d'une opération NOT avec le premier opérande crypté.

**8.** Unité arithmétique selon l'une des revendications 1 à 7,
dans laquelle la première, la deuxième et la troisième entrée (10, 12, 14) et la première et la deuxième sortie (16, 18) forment un additionneur complet à un bit destiné à un bit n qui est crypté avec une clé $k_n$,
dans laquelle il y a un autre additionneur complet à un bit (303) qui est destiné à un bit n + 1 crypté avec une clé $k_{n+1}$ et qui est identique à l'additionneur complet à un bit qui est destiné au bit n,
un signal qui est donné par l'équation suivante :

$$z_{n+1} = \bar{c}_n \oplus (k_n \oplus k_{n+1})$$

pouvant être appliqué à la troisième entrée (14) de l'additionneur complet à un bit destiné au bit n+1,
$z_{n+1}$ étant un bit de retenue, crypté avec la clé $k_{n+1}$, de l'additionneur complet à un bit destiné au bit n, $\bar{c}_n$ étant le bit de retenue de l'additionneur complet à un bit destiné au bit n, crypté avec le paramètre de cryptage $k_n$, $k_n$ étant le paramètre de cryptage pour le bit n, $k_{n+1}$ étant le paramètre de cryptage pour le bit n + 1 et $\oplus$ représentant une combinaison XOR.

9. Unité arithmétique selon la revendication 8, dans laquelle une combinaison XOR de la clé $k_n$ pour le bit n et de la clé $k_{n+1}$ pour le bit n + 1 peut être calculée en dehors d'une tranche de bits (301) pour le bit n + 1.

10. Unité arithmétique selon l'une des revendications 1 à 5, qui est prévue pour une opération mathématique de deux opérandes, les deux opérandes étant cryptés en utilisant un premier et un deuxième paramètre de cryptage (i, j), le premier et le deuxième paramètre de cryptage étant différents, l'entrée pour un paramètre de cryptage étant prévue pour le premier paramètre de cryptage (i), l'unité arithmétique ayant en plus les caractéristiques suivantes :

une autre entrée pour le deuxième paramètre de cryptage (j) ;
une porte XOR (700) pour la combinaison du premier opérande crypté (a) avec la deuxième clé (j) pour fournir le premier signal d'entrée d'unité arithmétique ; et
une porte XOR (702) pour la combinaison du deuxième opérande crypté (b) avec la première clé (i) pour fournir le deuxième signal d'entrée d'unité arithmétique.

11. Unité arithmétique selon la revendication 10, une combinaison XOR du premier paramètre de cryptage (i) et du deuxième paramètre de cryptage (j) pouvant être appliquée comme paramètre de cryptage à la première entrée de multiplexeur d'entrée et une version inversée logiquement de la combinaison XOR du premier paramètre de cryptage (i) et du deuxième paramètre de cryptage (j) pouvant être appliquée comme clé inversée logiquement à la deuxième entrée de multiplexeur d'entrée.

12. Unité arithmétique selon la revendication 10 ou 11,
dans laquelle la première, la deuxième et la troisième entrée (10, 12, 14) et la première et la deuxième sortie (16, 18) forment un additionneur complet à un bit pour une tranche de bits n pour laquelle il est prévu un premier et un deuxième paramètre de cryptage $i_n$ et $j_n$,
dans laquelle il y a un autre additionneur complet à un bit pour une tranche de bits n + 1 pour laquelle il est prévu un premier paramètre de cryptage $i_{n+1}$ et un deuxième paramètre de cryptage $j_{n+1}$, l'autre additionneur complet à un bit pour la tranche de bits n + 1 étant identique à l'additionneur complet à un bit pour la tranche de bits n, un signal qui est donné par les équations suivantes :

$$z_{n+1} = t_{n+1} \oplus c_n \; ; \; t_{n+1} = k_n \oplus k_{n+1} \; ; \; k_n = i_n \oplus j_n \; ; \; k_{n+1} = i_{n+1} \oplus j_{n+1}$$

pouvant être appliqué à la troisième entrée (14) de l'additionneur complet à un bit pour la tranche de bits n + 1 ;
$z_{n+1}$ représentant le troisième signal d'entrée d'unité arithmétique pour la tranche de bits n + 1, $t_{n+1}$ représentant un paramètre de recryptage pour la tranche de bits n + 1, $k_n$ correspondant à une combinaison XOR du premier et du deuxième paramètre de cryptage pour la tranche de bits n et $k_{n+1}$ correspondant à une combinaison XOR du premier et du deuxième paramètre de cryptage pour la tranche de bits n + 1.

13. Procédé pour combiner un premier opérande (a) et un deuxième opérande (b), comportant les étapes suivantes :

calcul d'un bit de somme intermédiaire s par l'équation suivante :

$$s = \bar{x} \oplus \bar{y} \oplus \bar{z} \; ;$$

et calcul d'un bit de retenue inversé logiquement c par l'équation suivante :

$$\bar{c} = NOT(\bar{x} \cdot \bar{y} + z \cdot \bar{x} + z \cdot \bar{y}) \; ;$$

"·" représentant une opération ET logique, $\oplus$ représentant une opération XOR logique, "+" représentant une opération OU logique, NOT représentant une négation, $\bar{x}$ représentant une version inversée logiquement du premier opérande, $\bar{y}$ représentant une version inversée logiquement du deuxième opérande, z étant un signal de commande de combinaison et $\bar{z}$ étant un signal de commande de combinaison inversé logiquement,
**caractérisé par le fait que**
parmi le premier et le deuxième opérande, au moins l'un est un opérande crypté d'une opération mathématique qui est déduit d'un opérande non crypté correspondant en utilisant un algorithme de cryptage et un paramètre de cryptage, l'algorithme de cryptage comprenant une combinaison XOR ou XNOR,

et, en fonction d'un signal de commande (316), soit un paramètre de cryptage soit une clé inversée logiquement est utilisé comme signal de commande de combinaison.

FIG 1

$$s = \bar{x} \oplus \bar{y} \oplus \bar{z}$$

$$c = \bar{x} \cdot \bar{y} + z \cdot \bar{x} + z \cdot \bar{y}$$

FIG 2

FIG 3

FIG 4

$$(a \oplus b)' = FA_S(\overline{a'}, \overline{b'}, k) \qquad \text{XOR'}$$

$$(a \equiv b)' = FA_S(\overline{a'}, \overline{b'}, \overline{k}) \qquad \text{XNOR'}$$

$$(\overline{a + b})' = FA_C(\overline{a'}, \overline{b'}, k) \qquad \text{NOR'}$$

$$(\overline{a \cdot b})' = FA_C(\overline{a'}, \overline{b'}, \overline{k}) \qquad \text{NAND'}$$

$$(a + b)' = \overline{FA_C(\overline{a'}, \overline{b'}, k)} \qquad \text{OR'}$$

$$(a \cdot b)' = \overline{FA_C(\overline{a'}, \overline{b'}, k)} \qquad \text{AND'}$$

$$(\overline{a})' = FA_C(\overline{a'}, \overline{a'}, k) \qquad \text{NOT'}$$

$$(\overline{c})' = FA_C(\overline{a'}, \overline{b'}, \overline{z'}) \qquad \text{carry'}$$

# FIG 5

| m1 | m2 | $a_i'$ | $b_i'$ | $r_i'$ | Operation |
|----|----|----|----|----|----|
| 1 | 0 | a' | b' | $(a \oplus b)'$ | XOR' |
| 0 | 0 | a' | b' | $(a \equiv b)'$ | XNOR' |
| 0 | 1 | a' | b' | $(\overline{a + b})'$ | NOR' |
| 1 | 1 | a' | b' | $(\overline{a \cdot b})'$ | NAND' |
| 0 | 2 | a' | b' | $(a + b)'$ | OR' |
| 1 | 2 | a' | b' | $(a \cdot b)'$ | AND' |
| 0 | 1 | a' | a' | $(\overline{a})'$ | NOT' |
| 2 | 0 | a' | b' | $(a \text{ plus } b)'$ | ADD' |

# FIG 6

$$t_i = k_i \oplus k_{i-1}; \quad k_i = i_i \oplus j_i; \quad k_{i-1} = i_{i-1} \oplus j_{i-1}$$

FIG 7a

FIG 7b

| m1 | m2 | a' | b' | r' | Operation |
|----|----|-----|-----|-----|-----------|
| 1 | 0 | $a^{(i)}$ | $b^{(j)}$ | $(a \oplus b)^{(k)}$ | XOR' |
| 0 | 0 | $a^{(i)}$ | $b^{(j)}$ | $(a \equiv b)^{(k)}$ | XNOR' |
| 0 | 1 | $a^{(i)}$ | $b^{(j)}$ | $(\overline{a + b})^{(k)}$ | NOR' |
| 1 | 1 | $a^{(i)}$ | $b^{(j)}$ | $(\overline{a \cdot b})^{(k)}$ | NAND' |
| 0 | 2 | $a^{(i)}$ | $b^{(j)}$ | $(a + b)^{(k)}$ | OR' |
| 1 | 2 | $a^{(i)}$ | $b^{(j)}$ | $(a \cdot b)^{(k)}$ | AND' |
| 0 | 1 | $a^{(i)}$ | $a^{(j)}$ | $(\overline{a})^{(k)}$ | NOT' |
| 2 | 0 | $a^{(i)}$ | $b^{(j)}$ | $(a \text{ add } b)^{(k)}$ | ADD' |
| 3 | 0 | $a^{(i)}$ | $b^{(j)}$ | $(a \text{ sub } b)^{(k)}$ | SUB' |

# FIG 8

AND: $\quad r^{(k)} \leftarrow a^{(i)} \cdot b^{(j)} \cdot {!}j + {!}a^{(i)} \cdot {!}b^{(j)} \cdot j + b^{(j)} \cdot {!}i \cdot j + {!}b^{(j)} \cdot i \cdot {!}j$

OR: $\quad r^{(k)} \leftarrow a^{(i)} \cdot {!}b^{(j)} \cdot {!}j + {!}a^{(i)} \cdot b^{(j)} \cdot j + b^{(j)} \cdot {!}i \cdot {!}j + {!}b^{(j)} \cdot i \cdot j$

NAND: $\quad r^{(k)} \leftarrow {!}a^{(i)} \cdot b^{(j)} \cdot {!}j + a^{(i)} \cdot {!}b^{(j)} \cdot j + b^{(j)} \cdot i \cdot j + {!}b^{(j)} \cdot {!}i \cdot {!}j$

NOR: $\quad r^{(k)} \leftarrow {!}a^{(i)} \cdot {!}b^{(j)} \cdot {!}j + a^{(i)} \cdot b^{(j)} \cdot j + b^{(j)} \cdot i \cdot {!}j + {!}b^{(j)} \cdot {!}i \cdot j$

XOR: $\quad r^{(k)} \leftarrow a^{(i)} \oplus b^{(j)}$

XNOR: $\quad r^{(k)} \leftarrow {!}a^{(i)} \oplus b^{(j)}$

SUM: $\quad r^{(k)} \leftarrow (a^{(i)} \oplus j) \oplus (b^{(j)} \oplus i) \oplus c_{in}^{(k)}$

CARRY: $\quad r^{(k)} \leftarrow (a^{(i)} \oplus j) \cdot (b^{(j)} \oplus i) + (a^{(i)} \oplus j) \cdot c_{in}^{(k)} + (b^{(j)} \oplus i) \cdot c_{in}^{(k)}$

$$k = i \oplus j$$

$"."\,\hat{=}\,\text{AND}$

$"+"\,\hat{=}\,\text{OR}$

$"!"\,\hat{=}\,\text{NOT}$

$"\oplus"\,\hat{=}\,\text{XOR}$

## FIG 9

<u>Verschlüsselung</u>

1000

$x' = x \oplus k \;\; ; \;\; x = x' \oplus k$ (Umkehrung)

<u>NOT-Operation</u>

$\overline{(a)}' = \overline{(a')} = \overline{[(\overline{a' \oplus k})]} \oplus k$

<u>OR-Operation</u>

1002

$(a+b)' = (a'+b') \cdot \overline{k} + (a' \cdot b') \cdot k =$

$= [(a' \oplus k) + (b' \oplus k)] \oplus k = (a'+b') \cdot \overline{k} + a' \cdot b'$

<u>AND-Operation</u>

$(a \cdot b)' = (a'+b') \cdot k + (a' \cdot b') \cdot \overline{k} =$

$= (a' \oplus k) \cdot (b' \oplus k) \oplus k = (a'+b') \cdot k + a' \cdot b'$

<u>NOR-Operation</u>

$\overline{(a+b)}' = \overline{\overline{a'+b'}} + \overline{a' \cdot b'} \cdot k = \overline{[(a' \oplus k) + (b' \oplus k)]} \oplus k$

<u>NAND-Operation</u>

$\overline{(a \cdot b)}' = \overline{\overline{a'+b'}} + \overline{a' \cdot b'} \cdot \overline{k} = \overline{[(a' \oplus k) \cdot (b' \oplus k)]} \oplus k$

<u>XOR-Operation</u>

$(a \oplus b)' = (a' \oplus b') \oplus k = [(a' \oplus k) \oplus (b' \oplus k)] \oplus k$

<u>XNOR-Operation</u>

$(a \equiv b)' = \overline{(a' \oplus b')} \oplus k = [(a' \oplus k) \equiv (b' \oplus k)] \oplus k$

<u>arithmetische AND-Operation</u>
(1-Bit-Volladdierer)

1004

$$x - \boxed{\begin{array}{c} \\ y - \text{FA} \\ \\ z - \end{array}} \begin{array}{l} - s \\ \\ - c \end{array}$$

$s' = \overline{z'} \cdot \overline{x'} \cdot y' + \overline{z'} \cdot x' \cdot \overline{y'} + z' \cdot \overline{x'} \cdot \overline{y'} + z' \cdot x' \cdot y'$

$c' = x' \cdot y' + z' \cdot x' + z' \cdot y'$

# FIG 10